(19) Europäisches Patentamt
European Patent Office
Office européen des brevets

(11) EP 4 742 410 A1

(12) EUROPEAN PATENT APPLICATION

(43) Date of publication:
13.05.2026 Bulletin 2026/20

(21) Application number: 25213997.7

(22) Date of filing: 06.11.2025

(51) International Patent Classification (IPC):
*H01M 50/414* (2021.01) *H01M 50/42* (2021.01)
*H01M 50/44* (2021.01) *H01M 50/449* (2021.01)

(52) Cooperative Patent Classification (CPC):
H01M 50/414; H01M 50/42; H01M 50/44;
H01M 50/449

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 07.11.2024 KR 20240157090

(71) Applicant: SAMSUNG SDI CO., LTD.
Yongin-si, Gyeonggi-do 17084 (KR)

(72) Inventors:
- GU, Ja Yeon
16678 Suwon-si (KR)
- SEO, Dong Wan
16678 Suwon-si (KR)
- KIM, Ga In
16678 Suwon-si (KR)
- PARK, Eun Jin
16678 Suwon-si (KR)
- AHN, Hwi Chan
16678 Suwon-si (KR)

(74) Representative: Maiwald GmbH
Elisenhof
Elisenstraße 3
80335 München (DE)

# (54) SEPARATOR FOR RECHARGEABLE BATTERY AND RECHARGEABLE BATTERY INCLUDING THE SAME

(57) Provided are a separator for a rechargeable lithium battery, and a rechargeable lithium battery including the separator. The separator includes one or more fibrous layers, wherein at least one of the fibrous layers includes a fiber network of fibers containing a first copolymer, and at least one of the fibrous layers includes a polyimide-based fiber, or a core-shell fiber containing a polyimide-based resin. The first copolymer includes a copolymer of a monomer mixture, which includes a first structural unit including a unit derived from an aromatic based unsaturated monomer; a second structural unit derived from a (meth)acryl-based monomer containing an alkyl group with 4 or more carbon atoms in the main chain in an ester moiety; and a third structural unit derived from a monomer containing a sulfonic acid group.

FIG 1.

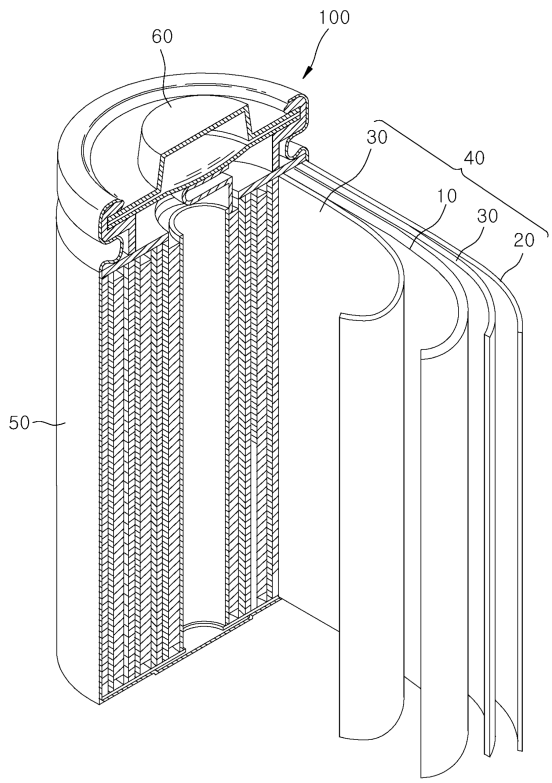




Processed by Luminess, 75001 PARIS (FR)

## Description

CROSS-REFERENCE TO RELATED APPLICATION

BACKGROUND

### 1. Field of the Disclosure

The present disclosure relates to a separator for a rechargeable battery, and a rechargeable battery including the separator

### 2. Discussion of Related Art

With increasing presence of electronic devices using batteries such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery includes a positive electrode and a negative electrode that contain an active material capable of the intercalation and deintercalation of lithium ions, and produces electrical energy by oxidation and reduction reactions when the lithium ions are intercalated into and deintercalated from the positive electrode and the negative electrode.

SUMMARY

The present disclosure describes a separator for a rechargeable battery, which has no porous substrate and provides desired or improved heat resistance, low membrane resistance, and high adhesion.

The present disclosure also describes a rechargeable battery which includes the separator for a rechargeable battery.

One aspect of the present disclosure includes a separator for a rechargeable battery.

1.The separator for a rechargeable battery includes one or more fibrous layers, wherein at least one of the fibrous layers includes a fiber network of fibers containing a first copolymer, and at least one of the fibrous layers includes a polyimide-based fiber, or a core-shell fiber containing a polyimide-based resin. The first copolymer includes a copolymer including a first structural unit including a unit derived from an aromatic based unsaturated monomer; a second structural unit derived from a (meth)acryl-based monomer containing an alkyl group with 4 or more carbon atoms in the main chain in an ester moiety; and a third structural unit derived from a monomer containing a sulfonic acid group. Herein, the first structural unit, the second structural unit, and the third structural unit are respectively included at a range of from about 5 mol% to about 80 mol%, a range of from about 10 mol% to about 60 mol%, and a range of from about 5 mol% to about 80 mol% with respect to 100 mol% of the copolymer.

2. The separator of aspect 1, wherein the first copolymer comprises an adhesive binder.

3. The separator of aspect 1 or 2, wherein the first copolymer has a glass transition temperature in a range of from about 60 °C to about 80 °C.

4. The separator of any one of aspects 1 to 3, wherein the sum of the contents of the first structural unit, the second structural unit, and the third structural unit in the copolymer is about 95 mol% or more.

5. The separator of any one of aspects 1 to 4, wherein a unit derived from the aromatic based unsaturated monomer is represented by Chemical Formula 1,

Chemical Formula 1:

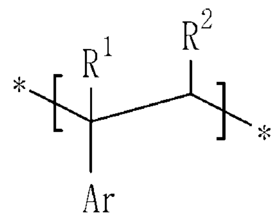

;

in Chemical Formula 1,

$R^1$ and $R^2$ each independently comprises hydrogen or a substituted or unsubstituted C1 to C5 alkyl group, and Ar comprises a substituted or unsubstituted, monocyclic or polycyclic C6 to C20 aryl group),
the second structural unit is represented by Chemical Formula 4,

Chemical Formula 4:

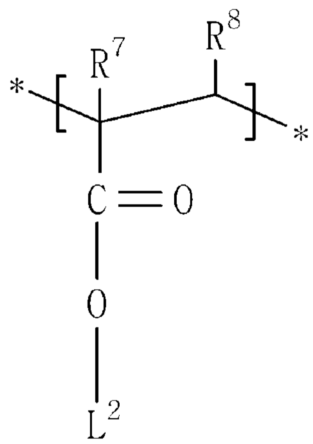

;

in Chemical Formula 4,
$R^7$ and $R^8$ each independently comprises hydrogen or a methyl group,
$L^2$ comprises a substituted or unsubstituted, linear or branched C4 to C30 alkyl group), and
the third structural unit is represented by any one of Chemical Formulas 5, 6, and 7:

Chemical Formula 5:

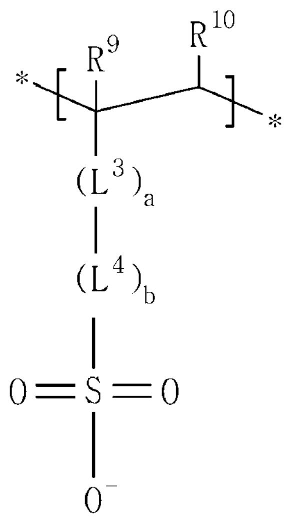

;

Chemical Formula 6:

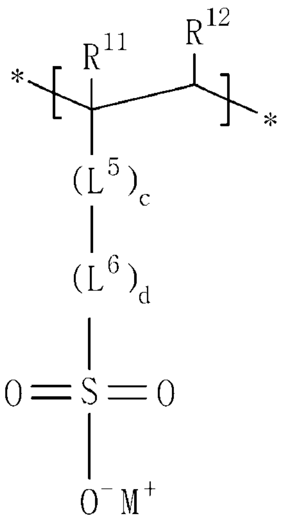

;

Chemical Formula 7:

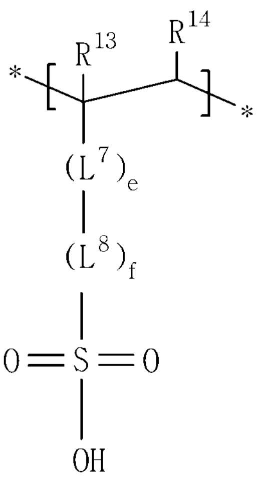

;

in Chemical Formulas 5 to 7,
$R^9$, $R^{10}$, $R^{11}$, $R^{12}$, $R^{13}$, and $R^{14}$ each independently comprises hydrogen or a C1 to C3 alkyl group,
$L^3$, $L^5$, and $L^7$ each independently comprises -C(=O)-, -C(=O)O-, -OC(=O)-, -O-, or -C(=O)NH-,
$L^4$, $L^6$, and $L^8$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a, b, c, d, e, and f are each independently an integer in a range of 0 to 2, and
in Chemical Formula 6,
M comprises an alkali metal.

6. The separator of any one of aspects 1 to 5, wherein the first structural unit further comprises a unit derived from a (meth)acryl-based monomer containing an alkyl group having 1 to 3 carbon atoms in the main chain in an ester moiety.
7. The separator of aspect 6, wherein the unit derived from the (meth)acryl-based monomer is a unit represented by Chemical Formula 3:

Chemical Formula 3:

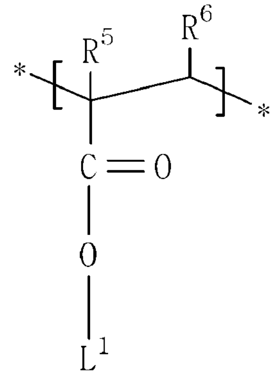

;

in Chemical Formula 3,

$R^5$ and $R^6$ each independently comprises hydrogen or a methyl group,
$L^1$ comprises a substituted or unsubstituted, linear or branched C1 to C3 alkyl group.

8. The separator of any one of aspects 1 to 7, wherein the separator comprises a multi-layer separator including the fibrous layer; and/or wherein the multi-layer separator comprises one or more, or two or more, fibrous layers including a fiber network of fibers containing the first copolymer.
9. The separator of aspect 8, wherein the multi-layer separator further comprises one or more, or two or more, fibrous layers including a fiber network of fibers containing one or more types of second copolymers.
10. The separator of aspect 8 or 9, wherein the multi-layer separator comprises one or more, or two or more, fibrous layers including a network of core-shell-type fibers, and the first copolymer is included in the core or shell of the core-shell-type fiber, optionally, wherein the core-shell-type fiber further comprises a second copolymer; and/or wherein the multi-layer separator further comprises one or more types of a fibrous layer including a network of fibers containing the first copolymer and a fibrous layer including a network of fibers containing one or more types of second copolymers.
11. The separator of aspect 8, wherein the multi-layer separator comprises one or more, or two or more, fibrous layers including a network of fibers containing a mixture of the first copolymer and a second copolymer; and/or wherein the multi-layer separator further comprises one or more types of a fibrous layer including a network of fibers containing the first copolymer, and a fibrous layer including a network of fibers containing one or more types of second copolymers.
12. The separator of any one of aspects 9 to 11, wherein the second copolymer includes any one or more of polyacrylonitrile, polyaniline, polypyrrole, polyrhodanine, melanine, polyurea, polyvinyl chloride, polyvinyl alcohol, polyethylene oxide, polymethyl methacrylate, polyacrylic acid, polylactic acid, polyimide, polyamideimide, polyaramid, polybenzylimidazole, polypropylene, resorcinol-formaldehyde resin, melamine-formaldehyde resin, pitch, sucrose, glucose, cellulose, and polyvinylidene fluoride.
13. The separator of any one of aspects 1 to 12, wherein the separator has no porous substrate.
14. The separator of any one of aspects 1 to 13, wherein the separator has a thickness of about 8 μm or less.

Another aspect of the present disclosure includes a rechargeable battery.

The rechargeable battery includes a positive electrode, a negative electrode, and the separator for a rechargeable battery located between the positive electrode and the negative electrode.

Since the separator for a rechargeable battery does not have a porous substrate, the overhang of the separator does not contract when the battery is exposed to heat, thereby reducing or preventing a short circuit and increasing the reliability of the battery. The separator for a rechargeable battery according to one example embodiment can improve the capacity, safety and lifetime of the battery by providing desired or improved heat resistance, high adhesion, and low membrane resistance.

BRIEF DESCRIPTION OF THE DRAWINGS

The above and other objects, features and advantages of the present disclosure becomes more apparent to those of ordinary skill in the art by describing example embodiments thereof in detail with reference to the accompanying drawings, in which:

FIG. 1 to FIG. 4 are cross-sectional views which schematically show lithium rechargeable batteries according to one example embodiment.

FIG. 5 to FIG. 9 are cross-sectional views which schematically show the separator for the rechargeable batteries according to one example embodiment.

DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, the term "A or B" may mean "including A, including B, or including A and B."

In the present specification, "a combination thereof" may mean a mixture, stack, composite, copolymer, alloy, blend, or reaction product of constituents.

Unless otherwise defined herein, "particle size D50" refers to a size of a particle with a cumulative volume of 50% by volume in a particle size distribution. The particle size D50 may be measured by methods known to those skilled in the art and for example, may be measured using a particle size analyzer, a transmission electron microscope photograph, or a scanning electron microscope photograph. As another method, the particle size D50 may be obtained by measuring the particle size using a measuring device using dynamic light scattering, performing data analysis to count the number of particles for each particle size range, and then calculating the particle size D50 therefrom. Alternatively, the particle size D50 may be measured using a laser diffraction method. When measuring the particle size by the laser diffraction method, for example, the particle size D50 based on 50% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of about 28 kHz with an output of 60 W.

If (when) the particle is spherical, the size may mean a diameter.

In the present specification, "(meth)acryl" refers to acryl and/or methacryl.

Hereinafter, unless otherwise defined, "substitution" means that hydrogen in a compound is substituted with a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (herein, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (herein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, herein, R denotes hydrogen, a C1 to C6 alkyl group, a C1 to C6 alkoxy group , or a C6 to C12 aryl group), a carboxyl group (-COOH) or a salt thereof (-C(=O)OM, herein, M denotes an organic or inorganic cation), a sulfonic acid group ($-SO_3H$) or a salt thereof ($-SO_3M$, herein, M denotes an organic or inorganic cation), a phosphate group ($-PO_3H_2$) or a salt thereof ($-PO_3MH$ or $-PO_3M_2$, herein, M denotes an organic or inorganic cation), and a combination thereof.

Hereinafter, the C1 to C3 alkyl group may be or include a methyl group, an ethyl group, or a propyl group. The C1 to C10 alkylene group may be or include, for example, a C1 to C6 alkylene group, a C1 to C5 alkylene group, or a C1 to C3 alkylene group and may be or include, for example, a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit.

Unless otherwise specifically stated in the chemical formulas described herein, hydrogen may be considered to be bonded in the structure of the chemical formula.

Hereinafter, "alkali metal" refers to an element belonging to Group 1 of the periodic table, such as lithium, sodium,

potassium, rubidium, cesium, or francium and may be present in a cationic or neutral state.

In the present specification, when describing a numerical range, "X to Y" means "X or more and Y or less (X≤ and ≤Y)."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, the present disclosure is described in detail. A separator for a rechargeable lithium battery is described below. However, the separator of the present disclosure may also be applied to a rechargeable battery other than a rechargeable lithium battery.

Since the separator for a rechargeable battery does not have a porous substrate, the overhang of the separator does not contract when the battery is exposed to heat, thereby reducing or preventing a short circuit and increasing the reliability of the battery.

The separator for a rechargeable battery may improve the capacity, safety and lifetime of the battery by providing desired or improved heat resistance, high adhesion, and low membrane resistance.

The separator for a rechargeable lithium battery according to one example embodiment includes one or more fibrous layers, wherein at least one of the fibrous layers includes a fiber network of fibers containing a first copolymer. The first copolymer includes a copolymer including a first structural unit including a unit derived from an aromatic based unsaturated monomer; a second structural unit derived from a (meth)acryl-based monomer containing an alkyl group with 4 or more carbon atoms in the main chain in an ester moiety; and a third structural unit derived from a monomer containing a sulfonic acid group. Herein, the first structural unit, the second structural unit, and the third structural unit are respectively included at a range of from about 5 mol% to about 80 mol%, a range of from about 10 mol% to about 60 mol%, and a range of from about 5 mol% to about 80 mol% with respect to 100 mol% of the copolymer.

In the specification, "fibrous layer" may mean a layer formed with fibers in a network like a net. Herein, the fiber may include one or more types of a nanofiber and a microfiber. Although not particularly limited, the fiber may be manufactured by electrospinning. The electrospinning may be performed by a conventional method known in the art. The electrospinning method is described in detail below.

The fibers may have an average size in a range of about 300 nm or less, for example, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 295, 300 nm, 50 nm to 200 nm.

The thickness of each fibrous layer may be about 20 μm or less, for example, 2, 3, 4, 5, 6, 7, 8, 9, 10, 11, 12, 13, 14, 15, 16, 17, 18, 19, 20 μm, 2 μm to 10 μm. Within this range, the fibrous layer may be used in a battery.

The thickness of the separator may be about 20 μm or less, for example, 2, 3, 4, 5, 6, 7, 8, 9, 10, 11, 12, 13, 14, 15, 16, 17, 18, 19, 20 μm, 5 μm to 10 μm. Within this range, the separator may be used in a battery.

The separator may not include a conventional known porous substrate, for example, a porous polyolefin-based substrate. The porous substrate is manufactured by stretching, and may be subject to heat shrinkage and melting at high temperatures, which may cause an overhang in the separator to contract when the battery is exposed to heat, thereby causing a short circuit. However, since the separator does not include the porous substrate, the reliability of the battery may be improved by reducing the possibility of the short circuit.

As at least one of the fibrous layers includes a fiber network of fibers containing a first copolymer, the separator may be used in a battery without the porous substrate. The separator may improve the capacity, safety and lifetime of the battery by providing desired or improved heat resistance, high adhesion, and low membrane resistance.

First Copolymer:

The first copolymer includes a copolymer including a first structural unit including a unit derived from an aromatic based unsaturated monomer; a second structural unit derived from an alkyl group-containing (meth)acrylic monomer having a main chain carbon number of 4 or more in the ester moiety; and a third structural unit derived from a sulfonic acid group-containing monomer. Based on 100 mol% of the copolymer, the first structural unit is present in an amount in a range of from about 5 mol% to about 80 mol%, the second structural unit in an amount in a range of from about 10 mol% to about 60 mol%, and the third structural unit in an amount in a range of from about 5 mol% to about 80 mol%.

The first copolymer can lower the membrane resistance of a separator, thereby improving the capacity of a lithium secondary battery, and can provide high adhesive strength, thereby improving the safety and lifespan of a lithium secondary battery. Additionally, the first copolymer provides high electrolyte moisture content and improved flexibility, resulting in improved resistance. Furthermore, the first copolymer can provide high capacity retention and low direct current internal resistance change at both room temperature (e.g., about 20 °C to about 30°C) and high temperature (e.g., about 40 °C to about 50°C), respectively.

According to one example embodiment, the first copolymer functions as an adhesive binder to ensure adhesion between the separator and the electrode. Membrane resistance and adhesion are typically in a trade-off relationship. The

first copolymer can lower the membrane resistance of the separator while also increasing adhesion.
If (when) present, the first copolymer may have a glass transition temperature (Tg) in a range of from about 60 °C to about 80 °C, for example, 60 °C to 70 °C. Within the above range, the first copolymer exhibits desired or improved adhesion to the electrode, and good ionic conductivity. The Tg of the first copolymer can be measured using, e.g., a thermomechanical analysis (TMA) method, as is known to those skilled in the art. For example, the glass transition temperature can be measured as follow:

1. Cut the copolymer or the binder to be analyzed to a size of 0.5 mm x 8 mm to prepare a sample, attach it to the holder, and place it on a sample probe of the TMA equipment.

2. Set the mechanical load to 0.0150 N and the heating rate to 5°C/min, and measure the change in the sample length according to temperature.

3. The temperature at which the slope of the graph obtained from the TMA equipment changes is designated as the glass transition temperature.

For the first copolymer, the total of the first structural unit, the second structural unit, and the third structural unit may be comprised at about 95 mol% or more, for example, 95 mol% to 100 mol%, for example, 100 mol%. Within this range, the above-described separation membrane effect may be readily realized.

First structural unit:

The first structural unit includes a unit derived from an aromatic based unsaturated monomer. The aromatic based unsaturated monomer may include an aromatic vinyl-based monomer. The unit derived from an aromatic based unsaturated monomer can provide adhesion so that the first coating layer is attached to the porous substrate and an electrode, and improve the air permeability of the separator.
The unit derived from an aromatic based unsaturated monomer is represented by the following Chemical Formula 1, and the copolymer may include one or more units represented by the following Chemical Formula 1:

Chemical Formula 1:

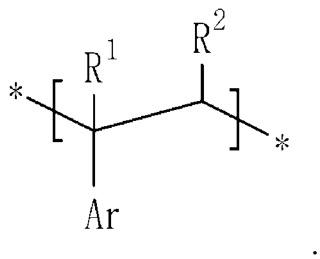

In Chemical Formula 1,

$R^1$ and $R^2$ each independently is or includes hydrogen or a substituted or unsubstituted C1 to C5 alkyl group, and

Ar is or includes a substituted or unsubstituted, monocyclic or polycyclic C6 to C20 aryl group.

In an example, Ar in Chemical Formula 1 is or includes a monocyclic or polycyclic C6 to C20 aryl group and may be or include, for example, at least one of a phenyl group, a naphthalenyl group, an anthracenyl group, a pyrenyl group, or the like.
In an example, the unit derived from an aromatic based unsaturated monomer is represented by the following Chemical Formula 2, and the copolymer may include one or more units represented by the following Chemical Formula 2:

Chemical Formula 2:

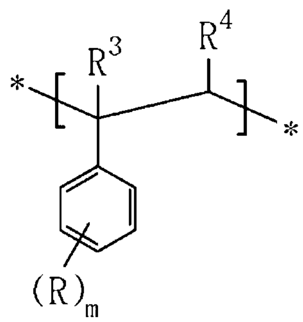

.

In Chemical Formula 2,

$R^3$ and $R^4$ each independently is or includes hydrogen or a substituted or unsubstituted C1 to C5 alkyl group,

R is or includes one or more of a substituted or unsubstituted C1 to C20 alkyl group, a substituted or unsubstituted C3 to C20 cycloalkyl group, a substituted or unsubstituted C1 to C20 alkoxy group, and a substituted or unsubstituted C3 to C20 aryl group, and

m is an integer in a range from 0 to 5.

In an example, R in Chemical Formula 2 may be or include a substituted or unsubstituted C1 to C20 alkyl group or a substituted or unsubstituted C1 to C20 alkoxy group. In an example, m in Chemical Formula 2 may be equal to 0 or 1.

For example, the aromatic based unsaturated monomer may include at least one or more of styrene, α-methyl styrene, 4-butyl styrene such as 4-n-butyl styrene, 4-iso-butyl styrene, 4-t-butyl styrene, and the like, butoxy styrene including 4-butoxy styrene such as 4-n-butoxy styrene, 4-iso-butoxy styrene, 4-t-butoxy styrene, and the like, halo styrene such as chloro styrene, bromo styrene, fluoro styrene, and the like, vinyl toluene such as 4-vinyl toluene, 3-vinyl toluene, 2-vinyl toluene, and the like, and vinyl naphthalene such as 1-vinyl naphthalene, 2-vinyl naphthalene, and the like.

In addition to the unit derived from an aromatic based unsaturated monomer, the first structural unit may further include a unit derived from a (meth)acrylic monomer containing an alkyl group having 1 to 3 carbon atoms in the main chain in the ester moiety. The unit derived from the (meth)acrylic monomer can provide an additional adhesion improvement effect.

The unit derived from the (meth)acrylic monomer is represented by the following Chemical Formula 3, and the copolymer may include one or more units represented by the following Chemical Formula 3:

Chemical Formula 3:

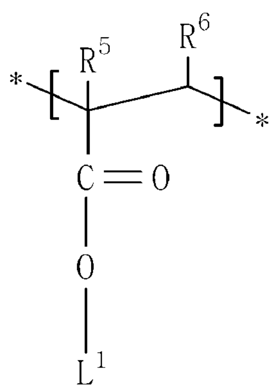

.

In Chemical Formula 3,

$R^5$ and $R^6$ each independently is or includes hydrogen or a methyl group, and
$L^1$ is or includes a substituted or unsubstituted, straight or branched C1 to C3 alkyl group.

In an example, the (meth)acrylic monomer may include at least one or more of methyl (meth)acrylate, ethyl (meth)acrylate, n-propyl (meth)acrylate, and isopropyl (meth)acrylate.

For example, a homopolymer of the (meth)acrylic monomer may have a glass transition temperature of about 50 °C or higher, for example, 50 °C to 150 °C. In the above range, a glass transition temperature of the above-described copolymer can be readily reached. For example, the (meth)acrylic monomer may be or include at least one of methyl methacrylate, ethyl methacrylate, or the like.

The first structural unit is included in an amount in a range of from about 5 mol% to about 80 mol% with respect to 100 mol% of the copolymer. When the first structural unit is included in an amount of about 5 mol% or more, electrolyte wettability can be improved, and a capacity retention rate at high temperature can be high. When the first structural unit is included in an amount of about 80 mol% or less, membrane resistance may not be increased, and a capacity retention rate at room temperature and high temperature can be high. For example, the first structural unit may be included in an amount in a range of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, from about 10 mol% to about 70 mol%, or about 30 mol% to 60 mol%, with respect to 100 mol% of the copolymer. When the first structural unit is included in the above range, the separator can exhibit low membrane resistance, desired or improved adhesion to a porous substrate and an electrode, air permeability, and oxidation resistance.

The unit derived from an aromatic based unsaturated monomer may be included in an amount in a range of from about 5 mol% to about 80 mol%, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, 10 mol% to 70 mol%, 10 mol% to 60 mol%, 10 mol% to 35 mol%, 15 mol% to 30 mol%, or 5 mol% to 35 mol% with respect to 100 mol% of the copolymer. In the above range, the above-described effects of the separator can be readily implemented.

The unit derived from the (meth)acrylic monomer may be included in an amount in a range of from about 0 mol% to about 80 mol%, for example 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, 5 mol% to 80 mol%, 10 mol% to 70 mol%, 10 mol% to 60 mol%, 10 mol% to 35 mol%, 15 mol% to 30 mol%, or 5 mol% to 35 mol% with respect to 100 mol% of the copolymer. In the above range, the above-described effects of the separator can be readily implemented.

According to an example embodiment, the unit derived from an aromatic based unsaturated monomer and the unit derived from the (meth)acrylic monomer may be included in a molar ratio in a range of from about 1:0.5 to 1:2, for example, 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2, 1:1 to 1:2 or 1:1 with respect to 100 mol% of the copolymer. In the above range, the above-described effects of the separator can be readily implemented.

Second structural unit:

The second structural unit is derived from a (meth)acrylic monomer containing an alkyl group having 4 or more carbon atoms in the main chain in the ester moiety. The second structural unit can improve the dispersibility of a coating layer slurry, and also improve the electrolyte wettability and flexibility of the coating layer.

The unit derived from the (meth)acrylic monomer is represented by the following Chemical Formula 4, and the copolymer may include one or more structural units represented by the following Chemical Formula 4:

Chemical Formula 4:

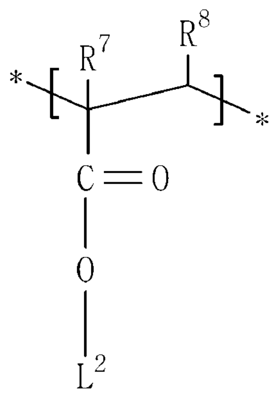

In Chemical Formula 4,

$R^7$ and $R^8$ each independently is or includes hydrogen or a methyl group, and
$L^2$ is or includes a substituted or unsubstituted, straight or branched C4 to C30 alkyl group.

In this case, the alkyl group may be or include a C4 to C20 alkyl group, a C4 to C10 alkyl group, or a C4 to C8 alkyl group.

According to an example embodiment, the (meth)acrylic monomer may include at least one or more of 2-ethylhexyl (meth)acrylate, n-butyl (meth)acrylate, iso-butyl (meth)acrylate, tert-butyl (meth)acrylate, pentyl (meth)acrylate, hexyl (meth)acrylate, heptyl (meth)acrylate, n-octyl (meth)acrylate, nonyl (meth)acrylate, isononyl (meth)acrylate, decyl (meth)acrylate, and isodecyl (meth)acrylate.

The second structural unit is included in an amount in a range of about 10 mol% to about 60 mol% with respect to 100 mol% of the copolymer. When the second structural unit is included in an amount of about 10 mol% or more, membrane resistance can decrease upon impregnation with an electrolyte, and a capacity retention rate at room temperature and high temperature can be high. When the second structural unit is included in an amount of about 60 mol% or less, air permeability can be improved, and a capacity retention rate at room temperature and high temperature can be high. For example, the second structural unit may be included in an amount in a range of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 mol%, from about 15 mol% to about 35 mol%, for example, 20 mol% to 60 mol%, 20 mol% to 30 mol% with respect to 100 mol% of the copolymer. In the above range, it can be possible to increase the adhesion to a porous substrate and an electrode and flexibility of the coating layer.

Third structural unit:

The third structural unit is a unit derived from a sulfonic acid group-containing monomer. The unit derived from a sulfonic acid group-containing monomer can decrease the membrane resistance of the separator by increasing the possibility of lithium ion movement in the presence of the first structural unit and the second structural unit.

According to an example embodiment, the third structural unit increases the glass transition temperature of the copolymer by including a bulky functional group derived from (meth)acrylamido sulfonic acid or a salt thereof, and thus structural safety is provided. Also, when the third structural unit is or includes a functional group derived from a salt of (meth)acrylamido sulfonic acid, a metal (M) may move through the third structural unit by a sulfonic acid functional group substituted with the metal, and thus the membrane resistance of the separator can significantly decrease.

The third structural unit may be represented by any one of the following Chemical Formula 5, 6, or 7. The copolymer may include one or more third structural units represented by the following Chemical Formulas 5, 6, and 7:

Chemical Formula 5:

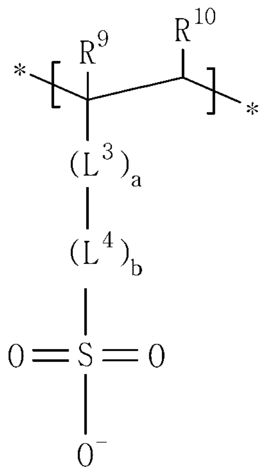

.

Chemical Formula 6:

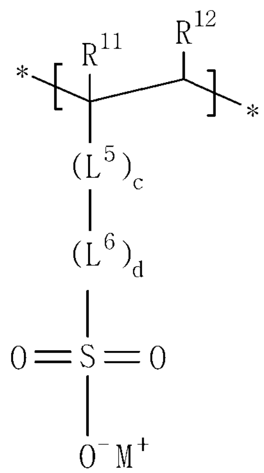

.

Chemical Formula 7:

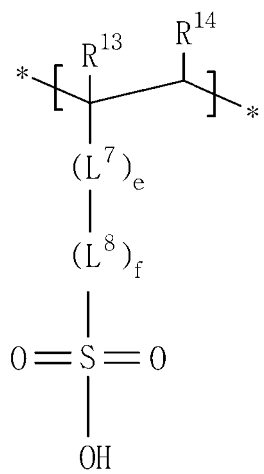

.

In Chemical Formulas 5 to 7,

$R^9$, $R^{10}$, $R^{11}$, $R^{12}$, $R^{13}$, and $R^{14}$ each independently is or includes hydrogen or a C1 to C3 alkyl group,

$L^3$, $L^5$, and $L^7$ each independently is or includes -C(=O)-, -C(=O)O-, - OC(=O)-, -O-, or -C(=O)NH-,

$L^4$, $L^6$, and $L^8$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and

a, b, c, d, e, and f are each independently an integer in a range from 0 to 2, and

in Chemical Formula 6,

M is or includes an alkali metal.

In an example, in Chemical Formulas 5 to 7,

$L^3$, $L^5$, and $L^7$ may each independently be or include -C(=O)NH-,

$L^4$, $L^6$, and $L^8$ may each independently be or include a C1 to C10 alkylene group, and

a, b, c, d, e, and f may be equal to 1.

The sulfonic acid group-containing structural unit may include only one of the structural units represented by Chemical Formulas 5 to 7, or two or more thereof. In an example, the sulfonic acid group-containing structural unit may include the structural unit represented by Chemical Formula 6, and in another example, the sulfonic acid group-containing structural unit may include the structural unit represented by Chemical Formula 6 and the structural unit represented by Chemical Formula 7.

The sulfonic acid group-containing structural unit may be or include, for example, a structural unit derived from at least one of vinyl sulfonic acid, allyl sulfonic acid, styrene sulfonic acid, anethol sulfonic acid, (meth)acrylamido alkane sulfonic acid, sulfoalkyl (meth)acrylate, or a salt thereof.

Herein, the alkane may be or include a C1 to C20 alkane, a C1 to C10 alkane, or a C1 to C6 alkane, and the alkyl may be or include a C1 to C20 alkyl, a C1 to C10 alkyl, or a C1 to C6 alkyl. The salt refers to a salt constituted by the above-described sulfonic acid and appropriate ions. The ion may be, for example, an alkali metal ion, and in this case, the salt may be or include a sulfonic acid alkali metal salt.

The (meth)acrylamido alkane sulfonic acid may be or include, for example, at least one of 2-(meth)acrylamido-2-methylpropane sulfonic acid, and the sulfoalkyl (meth)acrylate may be or include, for example, 2-sulfoethyl (meth) acrylate, 3-sulfopropyl (meth)acrylate, or the like.

The third structural unit is included in an amount in a range of from about 5 mol% to about 80 mol% with respect to 100 mol% of the copolymer. When the third structural unit is included in an amount of about 5 mol% or more, the membrane resistance of the separator can decrease, and the DC-IR change rate at room temperature and high temperature can decrease. When the third structural unit is included in an amount of about 80 mol% or less, the capacity retention rate of a battery at room temperature and high temperature can increase, and the DC-IR change rate at room temperature and high temperature can decrease.

For example, the third structural unit may be included in an amount in a range of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, from about 10 mol% to about 60 mol% with respect to 100 mol% of the copolymer. For example, the third structural unit may be included in an amount in a range of from about 20 mol% to about 60 mol%, about 30 mol% to about 60 mol%, or about 30 mol% to about 40 mol% with respect to 100 mol% of the copolymer. When the third structural unit is included in the above range, the membrane resistance of the binder and the separator including the same can significantly decrease, the capacity retention rate of a battery at room temperature and high temperature can increase, and the DC-IR change rate at room temperature and high temperature can decrease.

The binder may include an alkali metal. The alkali metal may be present in the form of a cation and may be or include, for example, at least one of lithium, sodium, potassium, rubidium, or cesium. For example, the alkali metal may be present in the form of a salt by being combined with the copolymer. The alkali metal can help the synthesis of the monomer mixture into the copolymer in an aqueous solvent and improve the adhesion of the coating layer, the air permeability of the separator, oxidation resistance, and the like.

The copolymer may have a glass transition temperature in a range of from about 60 °C to about 80 °C. In an

example, the glass transition temperature may be in a range of 60, 61, 62, 63, 64, 65, 66, 67, 68, 69, 70, 71, 72, 73, 74, 75, 76, 77, 78, 79, 80 °C, from 62 °C to 78 °C, for example, a range of 64 °C to 75 °C. In the above range, the coating layer can have desired or improved adhesion, and a separator including the coating layer can exhibit desired or improved air permeability and oxidation resistance. The glass transition temperature of the copolymer may be measured by a typical method known to those skilled in the art, such as thermomechanical analysis (TMA). For example, the glass transition temperature can be measured as follow:

1. Cut the copolymer or the binder to be analyzed to a size of 0.5 mm x 8 mm to prepare a sample, attach it to the holder, and place it on a sample probe of the TMA equipment.

2. Set the mechanical load to 0.0150 N and the heating rate to 5°C/min, and measure the change in the sample length according to temperature.

3. The temperature at which the slope of the graph obtained from the TMA equipment changes is designated as the glass transition temperature.

The alkali metal may be included in an amount in a range of from about 1 wt% to about 40 wt%, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt%, 1 wt% to 30 wt%, 1 wt% to 20 wt%, or 10 wt% to 20 wt% in the binder including the alkali metal and the copolymer. For example, the copolymer and the alkali metal may be included in a weight ratio in a range of from about 99:1 to about 60:40, or 99:1 to 70:30, for example, a weight ratio in a range of about 99:1 to about 80:20, or 90:10 to 80:20.

The alkali metal may be included in an amount in a range of from about 0.1 mol% to about 1.0 mol% with respect to the total amount of the alkali metal and the copolymer of the monomer mixture. When the alkali metal is included in the above range, the coating layer can have desired or improved adhesion, and a separator including the same can exhibit desired or improved air permeability and oxidation resistance.

The binder including the copolymer of the monomer mixture may be in various forms such as an alternating polymer in which the structural units are alternately distributed, a random polymer in which the structural units are randomly distributed, and a graft polymer in which some structural units are grafted, and the like.

The binder including the copolymer of the monomer mixture may have a weight average molecular weight in a range of from about 100,000 g/mol to 1,000,000 g/mol, 100,000 g/mol to 500,000 g/mol, 100,000 g/mol to 150,000 g/mol, 200,000 g/mol to 130,000 g/mol, or 300,000 g/mol to 900,000 g/mol. When the weight average molecular weight of the binder including the copolymer of the monomer mixture satisfies the above range, desired or improved adhesion and low resistance can be exhibited. The weight average molecular weight may be a polystyrene-converted average molecular weight measured using, e.g., gel permeation chromatography.

The first copolymer of the monomer mixture may be prepared by solution polymerization.

The separator includes at least one fiber layer including a fiber network including the first copolymer without a porous substrate. The fiber layer can facilitate reducing the thermal shrinkage rate of the separator in an electrolyte, and lowering the resistance.

The separator may include at least one fiber layer comprising a fiber network comprising the first copolymer.

According to one example embodiment, the separator may comprise two or more fiber layers comprising a fiber network comprising the first copolymer.

The first copolymer may be present in an amount of at least about 50 wt%, for example, a range of from about 60 wt% to about 100 wt%, of the fibers.

The separator may comprise a fiber layer comprising a fiber network comprising the first copolymer. The separator may be or include a single-layer separator, or a multilayer separator comprising multiple fiber layers. Herein, a multilayer separator refers to a separator comprising multiple fiber layers laminated together. A multilayer separator can readily incorporate multiple polymers with different electrospinning conditions into the separator, and enhance the strength of the separator.

A separator including multiple fibrous layers is described in detail below.

Multi-layer separator:

The multi-layer separator may include a fiber network of fibers containing the first copolymer.

According to one example embodiment, the multi-layer separator may include one or more, or two or more, fibrous layers including a fiber network of fibers including the first copolymer.

The multi-layer separator may further include one or more, or two or more, fibrous layers including a fiber network of fibers containing one or more types of second copolymers, which are different from the first copolymer.

In one example embodiment, the multi-layer separator may be or include a triple-layer separator in which a

fibrous layer including a network of fibers containing the first copolymer; a fibrous layer including a network of fibers containing the second copolymer; and a fibrous layer including a network of fibers containing the first copolymer are stacked, e.g., sequentially stacked.

In another example embodiment, the multi-layer separator may be or include a triple-layer separator in which a fibrous layer including a network of fibers containing the second copolymer; a fibrous layer including a network of fibers containing the first copolymer; and a fiber including a network of fibers containing the second copolymer are stacked, e.g., sequentially stacked.

In still another example embodiment, the multi-layer separator may include one or more, or two or more, fibrous layers including a network of core-shell-type fibers containing the first copolymer. Herein, the first copolymer may also be contained in the core or shell of the core-shell-type fiber.

The multi-layer separator may further include one or more, or two or more, fibrous layers including a network of fibers containing one or more types of second copolymers, which may be different from the first copolymer.

The multi-layer separator may further include one or more, or two or more, fibrous layers including a network of fibers containing the first copolymer.

In one example embodiment, the multi-layer separator may be or include a triple-layer separator in which a fibrous layer including a network of fibers containing one or more types of second copolymers; a fibrous layer including a network of core-shell-type fibers; and a fibrous layer including a network of fibers containing one or more types of second copolymers are stacked, e.g., sequentially stacked. The core-shell-type fiber may be or include a fiber which includes a core containing the first copolymer and a shell containing the second copolymer. Alternatively, the core-shell-type fiber may be or include a fiber which includes a core containing the second copolymer and a shell containing the first copolymer.

In another example embodiment, the multi-layer separator may be or include a triple-layer separator in which a fibrous layer including a network of core-shell-type fibers; a fibrous layer including a network of fibers containing one or more types of second copolymers; and a fibrous layer including a network of core-shell-type fibers are stacked, e.g., sequentially stacked. The core-shell-type fiber may be or include a fiber which includes a core containing the first copolymer and a shell containing the second copolymer. Alternatively, the core-shell-type fiber may be or include a fiber which includes a core containing the second copolymer and a shell containing the first copolymer.

In still another example embodiment, the multi-layer separator may include one or more, or two or more, fibrous layers including a network of fibers containing a mixture of the first copolymer and the second copolymer.

In the mixture, the first copolymer may be contained at a range of from about 10 wt% to about 90 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90 wt%, 20 wt% to 50 wt%, and the second copolymer may be contained at 10 wt% to 90 wt%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90 wt%, or 50 wt% to 80 wt%.

The multi-layer separator may further include one or more, or two or more, fibrous layers including a network of fibers containing the first copolymer.

The multi-layer separator may include one or more or two or more fibrous layers including a network of fibers containing the second copolymer.

In one example embodiment, the multi-layer separator may be or include a triple-layer separator in which a fibrous layer including a network of fibers containing the first copolymer and the second copolymer; a fibrous layer including a network of fibers containing the second copolymer; and a fibrous layer including a network of fibers including the first copolymer and the second copolymer are stacked, e.g., sequentially stacked.

In another example embodiment, the multi-layer separator may be or include a triple-layer separator in which a fibrous layer including a network of fibers containing the second copolymer; a fibrous layer including a network of fibers containing the first copolymer and the second copolymer; and a fibrous layer including a network of fibers including the second are copolymer stacked, e.g., copolymer sequentially stacked.

The second copolymer is described in detail below.

Second copolymer:

The second copolymer may be different from the first copolymer.

According to one example embodiment, the second copolymer may include a copolymer which has a unit derived from a monomer that is different from the first copolymer, or a different molar ratio of each monomer.

The second copolymer may be capable of producing fibers by electrospinning, and may not be particularly limited as long as the effect of the separator is not affected.

The second copolymer may include any one or more of polyacrylonitrile, polyaniline, polypyrrole, polyrhodanine, melanine, polyurea, polyvinyl chloride, polyvinyl alcohol, polyethylene oxide, polymethyl methacrylate, polyacrylic acid,

polylactic acid, polyimide, polyamideimide, polyaramid, polybenzylimidazole, polypropylene, resorcinol-formaldehyde resin, melamine-formaldehyde resin, pitch, sucrose, glucose, cellulose, and polyvinylidene fluoride.

In one example embodiment, the second copolymer may be or include polyimide or a mixture including about 50 wt% or more of polyimide. The second copolymer may increase the heat resistance of the separator, and may be advantageous for reducing the resistance of a battery, increasing adhesion, lowering a shutdown temperature, and increasing processability when combined with a fibrous layer including a network of fibers containing the first copolymer. The first copolymer may have a desired or improved effect of offsetting resistance with respect to the second copolymer including the polyimide, or a mixture including about 50 wt% or more of the polyimide.

In another example embodiment, the second copolymer may be or include polyvinylidene fluoride or a mixture including about 50 wt% or more of polyvinylidene fluoride. Such a second copolymer may increase the flexibility of the separator, and further increase the adhesion of the separator.

In another example embodiment, the second copolymer may be or include a mixture including about 50 wt% or more of a mixture of polyimide and polyvinylidene fluoride. Such a second copolymer may increase the flexibility of the separator, further increase the adhesion of the separator, and improve the processability of the separator by offsetting the brittleness of the polyimide.

Electrospinning:

The fibrous layer may be manufactured by electrospinning solutions respectively including the first copolymer and the second copolymer.

The solutions may facilitate the dispersion and dissolution of the first copolymer and the second copolymer, thereby facilitating electrospinning. The solvent may be or include at least one of methylformamide, dimethylacetamide, dimethyl sulfoxide, or methylpyrrolidone, but the present disclosure is not limited thereto. In order to increase the dispersion and dissolution of the copolymers, stirring and/or heating may be further performed.

The electrospinning may be performed in a space where the inner temperature is about 25 °C or more, for example, 25 °C to 60 °C. Within this range, since a significant amount of the solvent in the electrospinning solution is evaporated, there is almost no residual solvent, so the influence of the solvent on a battery may be reduced.

The electrospinning may be performed by positioning one nozzle pack consisting of a tip with a needle size in a range of about 23 gauge (G) to about 30 gauge (G) and a collecting roller at a predetermined interval, adding the electrospinning solution to the tip, positioning the substrate on the contact roller, and then applying a voltage in a range of about 35 kV to about 90 kV to the tip. The gap between the nozzle pack and the active material layer may be in a range of about 10 cm to about 20 cm. When the needle size of the tip is in a range of about 25G to 30G, the needle size may be suitable because a fibrous layer having a desired shape may be formed.

According to the electrospinning process, as the electrospinning solution is spun and stretched into a fiber shape, a layer including nanofibers may be formed on the substrate. This is because the electrospinning solution hangs on the tip in the form of a droplet due to surface tension, and when voltage is applied, charges accumulate on the surface of the solution and a repulsive force between charges occurs. When the critical voltage at which the repulsive force between charges exceeds the surface tension of the solution is reached, a conical Taylor cone is generated, and a jet of the electrospinning solution is sprayed from the tip of the cone, and the jet is highly elongated to form nanofibers, which are collected on the substrate to form a fibrous layer.

The air pressure of the nozzle may be about 1 MPa or more. Within this range, the degree of solvent volatilization is high, so the influence of the residual solvent on the battery may be reduced.

It may be advantageous to appropriately adjust the tip air so that the interference between tips is minimized, and electrospinning can occur uniformly. The tip air may be adjusted by flowing compressed air at a pressure in a range of from about 0.1 MPa to about 0.3 MPa.

The roll speed of the collecting roller may be adjusted so that the fibrous layer may be formed to an appropriate thickness, and may be, for example, in a range of from about 1 m/min to about 3 m/min. In addition, the flow rate of the electrospinning solution may be adjusted so that the electrospinning solution is discharged from the tip at a rate in a range of from about 20 μL/min to about 200 μL/min. In one example embodiment, after performing the electrospinning process, a drying process may be performed at a range of from about 20 °C to about 30 °C.

A core-shell-type fiber may be manufactured by respectively injecting the first copolymer and the second copolymer into nozzles of the core and the shell, and then electrospinning the first copolymer and the second copolymer simultaneously or contemporaneously. The method of manufacturing a core-shell-type fiber is conventionally known to those of ordinary skill in the art.

Manufacture of separator:

The separator may be manufactured by manufacturing the fibrous layer and pressing the fibrous layer.

According to one example embodiment, the separator may be manufactured by manufacturing a plurality of separate fibrous layers, and then stacking and pressing the fibrous layers together.

According to another example embodiment, the separator may be manufactured by injecting the electrospinning solutions containing the copolymers into nozzles which are positioned, e.g., sequentially positioned, spinning or sequentially spinning the copolymers, and simultaneously or contemporaneously pressing the copolymers.

The pressing may be performed by pressing with a roller, but the present disclosure is not limited thereto.

The separator may have desired or improved air permeability, for example, less than about 250 sec/100cc, for example, 230 sec/100cc or less, or 200 sec/100cc or less. That is, the separator may have an air permeability of less than about 40 sec/100cc·1 μm, for example, 30 sec/100cc·1 μm or less, or 25 sec/100cc·1 μm or less per unit thickness. Herein, the air permeability is the time (in seconds) it takes for 100 cc of air to pass through the unit thickness of the separator. The air permeability per unit thickness may be obtained by measuring the air permeability for the entire thickness of the separator, and dividing the measured air permeability by the thickness. The air permeability may be measured as the time (in seconds) it takes for 100 cc of air to pass through using an air permeability measuring device (Asahi Seiko, EG01-55-1MR).

The separator may have a shrinkage rate in an electrolyte of about 0.1% or less, for example, 0% to 0.1 %, or 0%. Within this range, the reliability of the battery may be improved.

FIG. 5 to FIG. 9 are cross-sectional views which schematically show the separator for the rechargeable batteries according to one example embodiment.

Referring to FIG. 5, the separator may comprise a layer 210 containing the fiber network of a fiber 211 containing the first copolymer, a layer 220 including the fiber network of a polyimide-based fiber 221, and a layer 230 containing the fiber network of a fiber 211 containing the first copolymer.

Referring to FIG. 6, the separator may comprise a layer 210 containing the fiber network of a fiber 211 containing the first copolymer and a polyimide-based fiber 221, a layer 220 including the fiber network of a polyimide-based fiber 221, and a layer 230 containing the fiber network of a fiber 211 containing the first copolymer and a polyimide-based fiber 221.

Referring to FIG. 7, the separator may comprise a layer 210 containing the fiber network of a core-shell fiber 212 containing the first copolymer, a layer 220 including the fiber network of a polyimide-based fiber 221, and a layer 230 containing the fiber network of a core-shell fiber 212 containing the first copolymer.

Referring to FIG. 8, the separator may comprise a layer 210 containing the fiber network of a polyimide-based fiber 221, a layer 220 including the fiber network of a core-shell fiber 212 containing the first copolymer, and a layer 230 containing the fiber network of a polyimide-based fiber 221.

Referring to FIG. 9, the separator may comprise a layer 210 containing the fiber network of a fiber 213, a layer 220 including the fiber network of a fiber 211 containing the first copolymer and a polyimide-based fiber 221, and a layer 230 containing the fiber network of a fiber 213.

## Rechargeable lithium battery

According to one example embodiment, the rechargeable lithium battery includes the separator for a rechargeable lithium battery; a positive electrode; and a negative electrode.

The separator for rechargeable lithium battery refers to the description described above. The separator for rechargeable lithium battery may be positioned between the positive electrode and the negative electrode.

## Positive electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can constitute a sacrificial positive electrode.

## Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof ,may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be

used. $Li_aA_{1-b}X_bO_{2-c}D_c$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8, 0≤b≤0.5, 0≤c≤0.5, and 0<α<2); $Li_aNi_{1-b-c}Mn_bX_cO_{2-\alpha}D_\alpha$ (0.90≤a≤1.8, 0≤b≤0.5, 0≤c≤0.5, and 0<α<2); $Li_aNi_bCo_cL^1_dG_eO_2$ (0.90≤a≤1.8, 0≤b≤0.9, 0≤c≤0.5, 0≤d≤0.5, and 0≤e≤0.1); $Li_aNiG_bO_2$ (0.90≤a≤1.8 and 0.001≤b≤0.1); $Li_aCoG_bO_2$ (0.90≤a≤1.8 and 0.001≤b≤0.1); $Li_aMn_{1-b}nG_bO_2$ (0.90≤a≤1.8 and 0.001 ≤b≤0.1); $Li_aMn_2GpO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); or $Li_aFePO_4$ (0.90≤a≤1.8).

**In** the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, **P,** or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of achieving high capacity, and can be applied to a high-capacity, high-density rechargeable lithium battery.

An amount of the positive electrode active material may be in a range of from about 90 wt% to about 99.5 wt% based on 100 wt% of the positive electrode active material layer. Amounts of the binder and the conductive material may be in a range of from about 0.5 wt% to about 5 wt%, respectively, based on 100 wt% of the positive electrode active material layer.

The binder attaches the positive electrode active material particles to each other, and attaches the positive electrode active material to the current collector.

Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.

Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

<u>Electrolyte Solution</u>

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIG. 1 to FIG. 4 are schematic views illustrating a rechargeable lithium battery according to an example embodiment. FIG. 1 shows a cylindrical battery, FIG. 2 shows a prismatic battery, and FIG. 3 and FIG. 4 show pouch-type batteries. Referring to FIG. 1 to FIG. 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12 coupled to the positive lead tab 11, a negative lead tab 21, and a negative terminal 22 coupled to the negative lead tab 21. As shown in FIG. 3 and FIG. 4, the rechargeable lithium battery 100 may include an electrode tab 70 illustrated in FIG. 4, or for example a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are only examples of the present disclosure, and the present disclosure is not limited to the following examples.

## 1. Verification of first copolymer

### Preparation Example 1

In a 3 L 4-neck separable flask equipped with a stirrer, a thermometer, and a condenser, 850 g of DMAc, styrene (SM, 36.45g, 0.35mol), methylmethacrylate (MMA, 35.04g, 0.35 mol), 2-ethylhexyl acrylate (EHA, 36.83 g, 0.20 mol), and 2-acrylamido-2-methylpropanesulfonic acid (AMPS, 20.73 g, 0.10 mol) were input, 1.1 mol LiOH was added with respect to AMPS. After adding the initiator AIBN (0. 164g, 0.001mol), the operation of reducing the internal pressure to 10 mmHg using a diaphragm pump and returning it to normal pressure using nitrogen was repeated three times.

The reaction was carried out for 12 hours while controlling heating so that the temperature of the reaction solution was stabilized between 65 °C to 70 °C.

After cooling to room temperature, approximately 10 mL of the reaction solution was taken to measure a non-volatile (NV) component, which indicated a copolymer with 9.8 wt% (theoretical value: 10 wt%) was obtained. In poly(styrene-co-methacrylate-co-2-ethylhexylacrylate-co-2-acrylamido-2-methylpropanesulfonic acid) lithium salt of the obtained copolymer, the molar ratio of a first structural unit derived from styrene and methacrylate, a second structural unit derived from 2-ethylhexylacrylate, and a third structural unit derived from 2-acrylamido-2-methylpropanesulfonic acid is 70:20:10, and the glass transition temperature (Tg) of the copolymer is 65.1 °C.

**Preparation Examples 2 to 7**

First copolymers were prepared in the same manner as in Preparation Example 1, with a difference that the molar ratio of monomers among the total 100 mol% of styrene (SM), methacrylate (MMA), 2-ethylhexyl acrylate (EHA), and 2-acrylamido-2-methylpropanesulfonic acid (AMPS) was changed as shown in Table 1 below.

**Comparative Preparation Examples 1 to 5**

First copolymers were prepared in the same manner as in Preparation Example 1, with a difference that the molar ratio of monomers among the total 100 mol% of styrene (SM), methacrylate (MMA), 2-ethylhexyl acrylate (EHA), and 2-acrylamido-2-methylpropanesulfonic acid (AMPS) was changed as shown in Table 1 below.
Table 1 below shows the molar ratio of monomers in the binders prepared in Preparation Examples 1 to 7 and Comparative Preparation Examples 1 to 5.

Table 1:

| | Molar ratio of monomers | | | | Tg (°C) |
|---|---|---|---|---|---|
| | SM | MMA | EHA | AMPS | |
| Preparation Example 1 | 35 | 35 | 20 | 10 | 65.1 |
| Preparation Example 2 | 29 | 29 | 22 | 20 | 65.0 |
| Preparation Example 3 | 23 | 23 | 24 | 30 | 64.0 |
| Preparation Example 4 | 17 | 17 | 26 | 40 | 64.8 |
| Preparation Example 5 | 11 | 11 | 28 | 50 | 64.7 |
| Preparation Example 6 | 5 | 5 | 30 | 60 | 64.6 |
| Preparation Example 7 | 20 | 0 | 30 | 50 | 60.0 |
| Comparative Preparation Example 1 | 2 | 2 | 30 | 66 | 67.1 |
| Comparative Preparation Example 2 | 42.5 | 42.5 | 10 | 5 | 85.5 |
| Comparative Preparation Example 3 | 40 | 40 | 5 | 15 | 102.9 |
| Comparative Preparation Example 4 | 40 | 40 | 17.5 | 2.5 | 67.3 |
| Comparative Preparation Example 5 | 2.5 | 2.5 | 10 | 85 | 127.3 |

**Reference Example 1**

A composition for an adhesive layer was prepared by mixing 10 parts by weight of the binder of Preparation Example 1 and 90 parts by weight of distilled water.
Both sides of polyethylene-based film (thickness: 5.5 μm, CZMZ, air permeability: 110 sec/100cc, pin puncture: 360 kgf) as a porous substrate were coated with the composition for an adhesive layer by die coating at a speed of 80 m/min, dried at 60 °C under an absolute vapor amount (average value) of 14 g/$m^3$, thereby forming an adhesive layer having a total thickness of 1.4 μm. As a result, a separator for a rechargeable lithium battery was manufactured.

**Reference Examples 2 to 12**

Separators for a rechargeable lithium battery were manufactured in the same manner as in Example 1, with a difference that the type of binder used in Reference Example 1 was changed.

**Manufacture of battery**

Manufacture of negative electrode:

A negative electrode active material slurry was prepared by mixing 97 wt% of graphene particles having an average particle size of 25 μm as a negative electrode material, 1.5 wt% of a styrene-butadiene rubber (SBR) binder, and 1.5 wt% of carboxymethylcellulose (CMC), adding the mixture to distilled water, and stirring the resultant using a mechanical stirrer for 60 minutes. The slurry was applied onto a 10 μm-thick copper current collector using a doctor

blade, dried in a 100 °C hot air dryer for 0.5 hours, dried again under vacuum at 120 °C for 4 hours and rolled, thereby manufacturing a negative electrode.

Manufacture of positive electrode:

A positive electrode active material slurry was prepared by mixing 97 wt% of $LiCoO_2$ as a positive electrode material, 1.5 wt% of carbon black powder as a conductive material, and 1.5 wt% of polyvinylidene fluoride (PVdF), adding the mixture to a N-methyl-2-pyrrolidone solvent, and stirring the resultant using a mechanical stirrer for 30 minutes. The slurry was applied onto a 20 μm-thick copper current collector using a doctor blade, dried in a 100 °C hot air dryer for 0.5 hours, dried again under vacuum at 120 °C for 4 hours and rolled, thereby manufacturing a positive electrode.

Jelly-roll type electrode assembly:

The separators obtained according to Examples and Comparative Examples were interposed between the positive electrodes and the negative electrodes manufactured above and rolled, thereby preparing a jelly-roll type electrode assembly. After the jelly roll was inserted into a pouch and an electrolyte was injected, the pouch was vacuum-sealed. As the electrolyte, a mixture in which 1.3M $LiPF_6$ was dissolved in a mixed solvent of ethylene carbonate (EC), ethyl methyl carbonate (EMC), and diethyl carbonate (DEC) in a volume ratio of 3:5:2 was used. The jelly roll inserted in the pouch was pressed at a temperature of 80 °C for 3 minutes while applying a pressure of 11.7 kgf/$cm^2$ to manufacture a rechargeable lithium battery.

**Air permeability (units: sec/100cc)**

The air permeability of the manufactured separator was measured by measuring the time (units: sec) it takes for 100 cc of air to pass through the separator using a measurement device (EG01-55-1MR, Asahi Seiko).

Air permeability measurement device settings:

Measurement pressure: 0.5 kg/$cm^2$, Cylinder pressure: 2.5 kg/$cm^2$, and Set time: 10 sec

**Electrolyte uptake rate (units: wt%)**

The above-prepared binder was dried in a 120 °C oven for 12 hours to obtain a film (thickness: 20 μm, the weight W1 was measured before immersion). The film was placed in the manufactured pouch and immersed in the electrolyte, and the pouch was vacuum-sealed. After the sealed pouch was left in a 60 °C oven for 72 hours, the film was immediately taken out and the weight W2 of the film was measured. The electrolyte uptake rate was measured as W2/W1 x 100.

**Positive electrode adhesion (units: N)**

The separator was attached to a positive electrode (manufactured in the same manner as in the manufacture of the battery), inserted into the pouch, an electrolyte (1.3M $LiPF_6$ was dissolved in a mixed solvent of ethylene carbonate (EC)/ethyl methyl carbonate (EMC)/diethyl carbonate (DEC) in a volume ratio of 3/5/2) was injected, and the pouch was left for 12 hours. The assembly was pressed under conditions of a pressure of 10 to 20 kgf/$cm^2$ and a temperature of 70 to 90 °C for 5 to 20 seconds, and then disassembled. After taking the separator and the positive electrode out of the pouch, the positive electrode and the separator were spread out 180°, and the force required to tear the positive electrode from the separator was measured using a tensile tester (Tinius Olsen, HT400).

**Membrane resistance (units: Ω)**

Membrane resistance was evaluated as electrochemical impedance spectroscopy (EIS) resistance. Each of the separators manufactured in Examples and Comparative Examples was impregnated with an electrolyte (1.5M $LiPF_6$ dissolved in a mixed solvent of ethylene carbonate, ethyl methyl carbonate, and dimethyl carbonate in a volume ratio of 3/5/2), and then fitted between aluminum foil electrodes with lead tabs and sealed in an aluminum pack to manufacture a test cell. The resistance (Ω) of this test cell was measured at 20 °C using the AC impedance method (measurement frequency: 100 kHz).

**200-cycle capacity retention rate (units: %)**

Each of the batteries manufactured using the separators of Examples and Comparative Examples was charged with constant current at a 0.5 C-rate at 25 °C and 45 °C until the voltage reached 4.2 V, and cut off at a 0.025 C-rate in a constant voltage mode, and then discharged at a 0.5 C-rate until the voltage reached 2.5 V. Such charging/discharging was repeated 200 times, and the capacity retention rate according to the number of cycles, that is, the lifetime characteristic, was evaluated. Therefore, the results were obtained.

**Direct current internal resistance (DC-IR) (units: mΩ)**

Each of the batteries with a cell capacity of 75 mAh manufactured using the separators of Examples and Comparative Examples was charged at 25 °C and 45 °C with constant current/constant voltage of 0.2 C/4.25 V and 0.05 C cut-off, and after resting for 10 minutes, each battery was discharged with constant current of 0.33 C and 2.80 Vcut-off and allowed to rest for 10 minutes. After one charge/discharge in the same manner as above, the direct current internal resistance (DC-IR) was measured by measuring voltage drop (V) occurring while applying current at 1 C for 10 seconds at SOC50 (the state of charge 50% with respect to the charge capacity of the battery of 100% (fully-charged), or equivalently, discharged by 50%).

The DC-IR change rate is the ratio of DC-IR after 200 cycles to the initial DC-IR, and is expressed as a percentage.

Table 2:

| | | Reference Example | | | | | | |
|---|---|---|---|---|---|---|---|---|
| | | 1 | 2 | 3 | 4 | 5 | 6 | 7 |
| First copolymer | | Preparat ion Exampl e 1 | Preparat ion Exampl e 2 | Preparat ion Exampl e 3 | Preparat ion Exampl e 4 | Preparat ion Exampl e 5 | Preparat ion Exampl e 6 | Preparat ion Exampl e 7 |
| Total thickness of adhesive layer | | 1.4 | 1.4 | 1.4 | 1.4 | 1.4 | 1.4 | 1.4 |
| Air permeability | | 133 | 134 | 132 | 133 | 133 | 135 | 136 |
| Electrolyte uptake rate | | 283 | 248 | 210 | 185 | 152 | 139 | 171 |
| Positive electrode adhesion | | 1.14 | 1.12 | 1.13 | 1.15 | 0.98 | 0.90 | 0.82 |
| Membrane resistance when impregnated with electrolyte | | 0.61 | 0.5 | 0.46 | 0.42 | 0.4 | 0.37 | 0.44 |
| 25 °C | Capac ity retenti on rate | 85 | 88 | 91 | 92 | 90 | 89 | 76 |
| | Initial DC-IR (mΩ) | 3.51 | 2.88 | 2.65 | 2.42 | 2.30 | 2.13 | 2.53 |
| | DC-IR (mΩ) after 200 cycles | 7.72 | 6.04 | 5.58 | 5.00 | 4.60 | 4.15 | 5.26 |
| | DC-IR chang e rate (%) after 200 cycles | 220 | 210 | 211 | 207 | 200 | 195 | 208 |

(continued)

| | | Reference Example | | | | | | |
|---|---|---|---|---|---|---|---|---|
| | | 1 | 2 | 3 | 4 | 5 | 6 | 7 |
| First copolymer | | Preparat ion Exampl e 1 | Preparat ion Exampl e 2 | Preparat ion Exampl e 3 | Preparat ion Exampl e 4 | Preparat ion Exampl e 5 | Preparat ion Exampl e 6 | Preparat ion Exampl e 7 |
| 45 °C | Capac ity retenti on rate | 71 | 73 | 76 | 77 | 75 | 74 | 63 |
| | Initial DC-IR (mΩ) | 3.19 | 2.61 | 2.40 | 2.20 | 2.09 | 1.93 | 2.30 |
| | DC-IR (mΩ) after 200 cycles | 10.52 | 8.23 | 7.61 | 6.82 | 6.27 | 5.66 | 7.18 |
| | DC-IR chang e rate (%) after 200 cycles | 330 | 315 | 317 | 311 | 300 | 293 | 312 |

Table 3:

| | | Reference Example | | | | |
|---|---|---|---|---|---|---|
| | | 8 | 9 | 10 | 11 | 12 |
| First copolymer | | Comparativ e Preparation Example 1 | Comparativ e Preparation Example 2 | Comparativ e Preparation Example 3 | Comparativ e Preparation Example 4 | Comparativ e Preparation Example 5 |
| Total thick-ness of ad-hesive layer | | 1.4 | 1.4 | 1.4 | 1.4 | 1.4 |
| Air permeability | | 131 | 128 | 126 | 134 | 125 |
| Electrolyte uptake rate | | 126 | 321 | 305 | 334 | 105 |
| Positive electrode adhesion | | 0.78 | 0.61 | 0.55 | 1.11 | 0.35 |
| Membrane resistance when impregnated with electrolyte | | 0.34 | 0.81 | 1.5 | 0.88 | 3.2 |
| 25 °C | Capacit y retentio n rate | 80 | 70 | 45 | 89 | 40 |
| | Initial DC-IR (mΩ) | 1.96 | 4.66 | 8.63 | 5.06 | 18.40 |
| | DC-IR (mΩ) after 200 cycles | 3.95 | 14.11 | 34.50 | 15.18 | 82.80 |
| | DC-IR change rate (%) after 200 cycles | 202 | 303 | 400 | 300 | 450 |

(continued)

| | | Reference Example | | | | |
|---|---|---|---|---|---|---|
| | | 8 | 9 | 10 | 11 | 12 |
| First copolymer | | Comparativ e Preparation Example 1 | Comparativ e Preparation Example 2 | Comparativ e Preparation Example 3 | Comparativ e Preparation Example 4 | Comparativ e Preparation Example 5 |
| 45 °C | Capacit y retentio n rate | 67 | 58 | 38 | 74 | 33 |
| | Initial DC-IR (mΩ) | 1.78 | 4.23 | 7.84 | 4.60 | 16.73 |
| | DC-IR (mΩ) after 200 cycles | 5.39 | 19.24 | 47.05 | 20.70 | 112.91 |
| | DC-IR change rate (%) after 200 cycles | 303 | 455 | 600 | 450 | 675 |

As shown in Table 2 above, the first copolymer of Examples exhibits low membrane resistance, which can improve the capacity, safety and lifetime of the battery. In addition, the first copolymer has high adhesion to an electrode, such as a positive electrode, and thus can increase reliability.
As shown in Table 3 above, a polymer other than the first copolymer of Examples could not obtain the effect of the first copolymer.

**2. Verification of separator**

**Example 1**

(1) Preparation of first solution and third solution

Each of a first solution and a third solution was prepared by mixing the copolymer of Preparation Example 1 and dimethylacetamide as a solvent.

(2) Preparation of second solution

A second solution was prepared by mixing polyimide (PI) and dimethylacetamide as a solvent.

(3) Electrospinning and manufacture of separator

An electrospinning device equipped with a first nozzle, a second nozzle, and a third nozzle sequentially positioned, along the direction of movement of a substrate was prepared. The first, second, and third solutions were injected into the first, second, and third nozzles, respectively.
While moving the substrate, the first, second, and third solutions were sequentially electrospun, from the first, and third nozzles and pressed, and then the substrate was removed, thereby manufacturing a separator.
The electrospinning process was carried out by the following method: electrospinning was carried out at an internal space temperature of 22 °C by positioning one nozzle pack having a needle size of 25G and a collecting roller at a distance of 16 cm, adding an electrospinning solution to the tip, and applying a voltage of 40 to 75kV. The roll speed of the collecting roller was set to 1 to 3 m/min. In addition, the electrospinning was carried out with air flowing at an air pressure of 0.275 MPa. After completing the electro spinning, hot-air drying was performed at 90 °C.

**Example 2**

(1) Preparation of first solution and third solution

Each of a first solution and a third solution were prepared by mixing a mixture of 40 parts by weight of the copolymer of Preparation Example 1 and 60 parts by weight of polyimide, with dimethylacetamide as a solvent.

(2) Preparation of second solution

A second solution was prepared by mixing polyimide and dimethylacetamide as a solvent.

(3) Electrospinning and manufacture of separator

A separator was manufactured with reference to the method described in Example 1.

**Example 3**

(1) Preparation of first solution and third solution

A solution for the core was prepared by mixing the copolymer of Preparation Example 1 and dimethylacetamide as a solvent. A solution for the shell was prepared by mixing polyimide and dimethylacetamide as a solvent.

(2) Preparation of second solution

A second solution was prepared by mixing polyimide and dimethylacetamide as a solvent.

(3) Electrospinning and manufacture of separator

A separator was manufactured with reference to the method described in Example 1.

**Example 4**

(1) Preparation of first solution and third solution

Each of a first solution and a third solution was prepared by mixing polyimide and dimethylacetamide as a solvent.

(2) Preparation of second solution

A solution for the core was prepared by mixing the copolymer of Preparation Example 1 and dimethylacetamide as a solvent. A solution for the shell was prepared by mixing polyimide and dimethylacetamide as a solvent.

(3) Electrospinning and manufacture of separator

A separator was manufactured with reference to the method described in Example 1.

**Example 5**

(1) Preparation of first solution and third solution

Each of a first solution and a third solution was prepared by mixing polyvinylidene fluoride and dimethylacetamide as a solvent.

(2) Preparation of second solution

A second solution was prepared by mixing the copolymer of Preparation Example 1 and polyimide with dimethylacetamide as a solvent.

(3) Electrospinning and manufacture of separator

A separator was manufactured with reference to the method described in Example 1.

**Example 6**

(1) Preparation of first solution and third solution

Each of a first solution and a third solution was prepared by mixing polyvinylidene fluoride and dimethylacetamide as a solvent.

(2) Preparation of second solution

A solution for the core was prepared by mixing the copolymer of Preparation Example 1 and dimethylacetamide as a solvent. A solution for the shell was prepared by mixing polyimide and dimethylacetamide as a solvent.

(3) Electrospinning and manufacture of separator

A separator was manufactured with reference to the method described in Example 1.

**Comparative Example 1**

A solution for electrospinning was prepared by mixing polyimide and dimethylacetamide as a solvent, and a separator formed only with a fibrous layer, which includes a network of polyimide nanofibers, was manufactured with reference to the method described in Example 1.

**Comparative Example 2**

A separator was manufactured in the same manner as in Example 2, except that the copolymer of Comparative Preparation Example 1 was used instead of the copolymer of Preparation Example 1.

**Comparative Example 3**

A separator was manufactured in the same manner as in Example 3, except that the copolymer of Comparative Preparation Example 1 was used instead of the copolymer of Preparation Example 1.

**Comparative Example 4**

A separator was manufactured in the same manner as in Example 1, except that polyethylene was used instead of polyimide.

**Comparative Example 5**

A separator was manufactured in the same manner as in Example 5, except that polyimide was used instead of the mixture of the copolymer of Preparation Example 1 and polyimide.
The physical properties of the separators manufactured in Examples and Comparative Examples were evaluated below.

**Thermal shrinkage rate in electrolyte (units: %)**

The separators for a lithium secondary battery of Examples and Comparative Examples were cut into a size of 8 cm × 8 cm, thereby preparing samples. A 5 cm × 5 cm square was drawn on the surface of each sample.
A positive electrode slurry was prepared by mixing 97 wt% of LiCoNiAl as a positive electrode active material, 1.5 wt% of carbon nanotubes as a conductive material, and 1.5 wt% of polyvinyl fluoride and adding water. A positive electrode was manufactured by applying the prepared positive electrode slurry on an aluminum foil and drying and rolling the prepared positive electrode slurry.
A negative electrode active material slurry was prepared by mixing 97.4 wt% of a negative electrode active material, 1.0 wt% of carboxymethylcellulose, 1.5 wt% of styrene-butadiene-based rubber, and 0.1 wt% of carbon nanotubes as a conductive material. A silicon-based negative electrode active material was used as the negative electrode active material. A negative electrode was manufactured by applying the prepared negative electrode slurry on a copper foil and drying and rolling the prepared negative electrode slurry.
One sheet of the sample was placed between the positive electrode and negative electrode to make three sets of

positive electrode-sample-negative electrode laminates, and then the laminates were put into a pouch. The laminate was completely saturated with an electrolyte by injecting 2 g of an electrolyte (ethylene carbonate, ethyl methyl carbonate, and dimethyl carbonate (volume ratio of 30:50:20) in which 1.5M $LiPF_6$ was dissolved), sealed and then left at 25 °C for 12 hours. After leaving the sample in an oven at 150 °C for 1 hour, the sample was taken out and the dimensions of the sides of the square that had been drawn were measured to calculate the shrinkage rate in each of the mechanical direction (MD) and the transverse direction (TD). The shrinkage rate was calculated according to the following Equation 1.

Equation 1:

$$\text{Shrinkage rate} = (L0 - L1)/L0 \times 100.$$

L0: the initial length of the separator, L1: the length of the separator after leaving it at 150 °C for 1 hour.

**DC-IR (units: mΩ)**

Each of the batteries with a cell capacity of 75 mAh manufactured using the separators of Examples and Comparative Examples was charged at 25 °C and 45 °C with constant current/constant voltage of 0.2 C/4.25 V and 0.05 C cut-off, and after resting for 10 minutes, each battery was discharged with constant current of 0.33 C and 2.80 Vcut-off and allowed to rest for 10 minutes. After one charge/discharge in the same manner as above, the direct current internal resistance (DC-IR) was measured by measuring voltage drop (V) occurring while applying current at 1 C for 10 seconds at SOC50 (the state of charge 50% with respect to the charge capacity of the battery of 100% (fully-charged), or equivalently, discharged by 50%).

Table 4:

| | | Example | | | | | |
|---|---|---|---|---|---|---|---|
| | | 1 | 2 | 3 | 4 | 5 | 6 |
| First fibrous layer | | Preparation Example 1 | Mixture of Preparation Example 1 and PI | Core (Preparation Example 1) and shell (PI) | PI | PVdF | PVdF |
| Second fibrous layer | | PI | PI | PI | Core (Preparation Example 1) and shell (PI) | Mixture of Preparation Example 1 and PI | Core (Preparation Example 1) and shell (PI) |
| Third fibrous layer | | Preparation Example 1 | Mixture of Preparation Example 1 and PI | Core (Preparation Example 1) and shell (PI) | PI | PVdF | PVdF |
| Thickness of separator | | 8 | 8 | 8 | 8 | 8 | 8 |
| Shrinkage rate | MD | 0 | 0 | 0 | 0 | 0 | 0 |
| | TD | 0 | 0 | 0 | 0 | 0 | 0 |
| DC IR | | 5.24 | 5.52 | 3.58 | 5.64 | 5.75 | 5.81 |

| | Comparative Example | | | | |
|---|---|---|---|---|---|
| | 1 | 2 | 3 | 4 | 5 |
| First fibrous layer | PI | Mixture of Comparative Preparation Example 1 and PI | Core (Comparative Preparation Example 1) and shell (PI) | Preparation Example 1 | PVdF |
| Second fibrous layer | - | PI | PI | PE film | PI |

(continued)

| | | Comparative Example | | | | |
|---|---|---|---|---|---|---|
| | | 1 | 2 | 3 | 4 | 5 |
| Third fibrous layer | | - | Mixture of Comparative Preparation Example 1 and PI | Core (Comparative Preparation Example 1) and shell (PI) | Preparation Example 1 | PVdF |
| Thickness of separator | | 8 | 8 | 8 | 8 | 8 |
| Shrinkage rate | MD | 0 | 0 | 0 | 51 | 0 |
| | TD | 0 | 0 | 0 | 54 | 0 |
| DC IR | | 9.1 | 8.65 | 8.71 | 3.94 | 9.82 |

As shown in Table 4 above, the separators of Examples have no porous substrate, and can provide desired or improved heat resistance, low membrane resistance, and high adhesion.

Although the example embodiments of the present disclosure are described above, the present disclosure is not limited thereto, and it is possible to implement various modifications within the scope of the claims, detailed description, and accompanying drawings, and it is obvious that these modifications also fall within the scope of the present disclosure.

## Claims

1. A separator for a rechargeable lithium battery, the separator comprising:

   one or more fibrous layers,
   wherein at least one of the fibrous layers includes a fiber network of fibers containing a first copolymer,
   at least one of the fibrous layers includes a polyimide-based fiber, or a core-shell fiber containing a polyimide-based resin,
   the first copolymer includes a copolymer of a monomer mixture, which includes a first structural unit including a unit derived from an aromatic based unsaturated monomer; a second structural unit derived from a (meth)acryl-based monomer containing an alkyl group with 4 or more carbon atoms in the main chain in an ester moiety; and a third structural unit derived from a monomer containing a sulfonic acid group, and
   the first structural unit, the second structural unit, and the third structural unit are respectively included at a range of from about 5 mol% to about 80 mol%, a range of from about 10 mol% to about 60 mol%, and a range of from about 5 mol% to about 80 mol% with respect to 100 mol% of the copolymer.

2. The separator of claim 1, wherein the first copolymer comprises an adhesive binder.

3. The separator of claim 1 or 2, wherein the first copolymer has a glass transition temperature in a range of from about 60 °C to about 80 °C.

4. The separator of any one of claims 1 to 3, wherein the sum of the contents of the first structural unit, the second structural unit, and the third structural unit in the copolymer is about 95 mol% or more.

5. The separator of any one of claims 1 to 4, wherein a unit derived from the aromatic based unsaturated monomer is represented by Chemical Formula 1,

Chemical Formula 1:

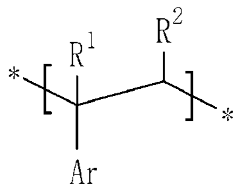

;

in Chemical Formula 1,

$R^1$ and $R^2$ each independently comprises hydrogen or a substituted or unsubstituted C1 to C5 alkyl group, and Ar comprises a substituted or unsubstituted, monocyclic or polycyclic C6 to C20 aryl group), the second structural unit is represented by Chemical Formula 4,

Chemical Formula 4:

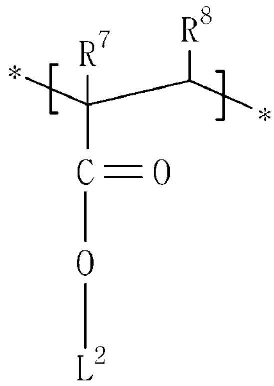

;

in Chemical Formula 4,
$R^7$ and $R^8$ each independently comprises hydrogen or a methyl group,
$L^2$ comprises a substituted or unsubstituted, linear or branched C4 to C30 alkyl group), and
the third structural unit is represented by any one of Chemical Formulas 5, 6, and 7:

Chemical Formula 5:

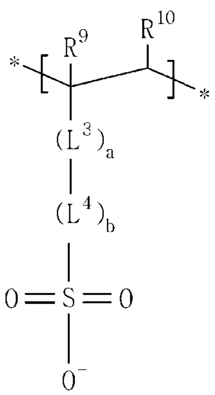

;

Chemical Formula 6:

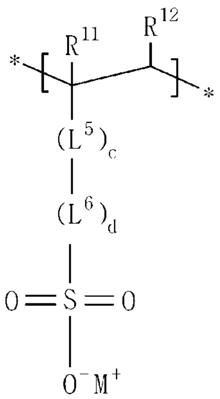

;

Chemical Formula 7:

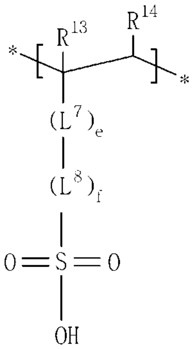

;

in Chemical Formulas 5 to 7,
$R^9$, $R^{10}$, $R^{11}$, $R^{12}$, $R^{13}$, and $R^{14}$ each independently comprises hydrogen or a C1 to C3 alkyl group,
$L^3$, $L^5$, and $L^7$ each independently comprises -C(=O)-, -C(=O)O-, -OC(=O)-, -O-, or -C(=O)NH-,
$L^4$, $L^6$, and $L^8$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a, b, c, d, e, and f are each independently an integer in a range of 0 to 2, and
in Chemical Formula 6,
M comprises an alkali metal.

**6.** The separator of any one of claims 1 to 5, wherein the first structural unit further comprises a unit derived from a (meth) acryl-based monomer containing an alkyl group having 1 to 3 carbon atoms in the main chain in an ester moiety.

**7.** The separator of claim 6, wherein the unit derived from the (meth)acryl-based monomer is a unit represented by Chemical Formula 3:

Chemical Formula 3:

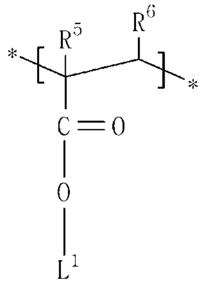

;

in Chemical Formula 3,

$R^5$ and $R^6$ each independently comprises hydrogen or a methyl group,
$L^1$ comprises a substituted or unsubstituted, linear or branched C1 to C3 alkyl group.

**8.** The separator of any one of claims 1 to 7, wherein the separator comprises a multi-layer separator including the fibrous layer; and/or wherein the multi-layer separator comprises one or more, or two or more, fibrous layers including a fiber network of fibers containing the first copolymer.

**9.** The separator of claim 8, wherein the multi-layer separator further comprises one or more, or two or more, fibrous layers including a fiber network of fibers containing one or more types of second copolymers.

**10.** The separator of claim 8 or 9, wherein the multi-layer separator comprises one or more, or two or more, fibrous layers including a network of core-shell-type fibers, and the first copolymer is included in the core or shell of the core-shell-type fiber, optionally, wherein the core-shell-type fiber further comprises a second copolymer; and/or wherein the multi-layer separator further comprises one or more types of a fibrous layer including a network of fibers containing the first copolymer and a fibrous layer including a network of fibers containing one or more types of second copolymers.

**11.** The separator of claim 8, wherein the multi-layer separator comprises one or more, or two or more, fibrous layers including a network of fibers containing a mixture of the first copolymer and a second copolymer; and/or wherein the multi-layer separator further comprises one or more types of a fibrous layer including a network of fibers containing the first copolymer, and a fibrous layer including a network of fibers containing one or more types of second copolymers.

**12.** The separator of any one of claims 9 to 11, wherein the second copolymer includes any one or more of polyacrylonitrile, polyaniline, polypyrrole, polyrhodanine, melanine, polyurea, polyvinyl chloride, polyvinyl alcohol, polyethylene oxide, polymethyl methacrylate, polyacrylic acid, polylactic acid, polyimide, polyamideimide, polyaramid, polybenzylimidazole, polypropylene, resorcinol-formaldehyde resin, melamine-formaldehyde resin, pitch, sucrose, glucose, cellulose, and polyvinylidene fluoride.

**13.** The separator of any one of claims 1 to 12, wherein the separator has no porous substrate.

**14.** The separator of any one of claims 1 to 13, wherein the separator has a thickness of about 8 μm or less.

**15.** A rechargeable lithium battery, comprising:

a positive electrode;
a negative electrode; and
the separator of any one of claims 1 to 14 located between the positive electrode and the negative electrode.

FIG 1.

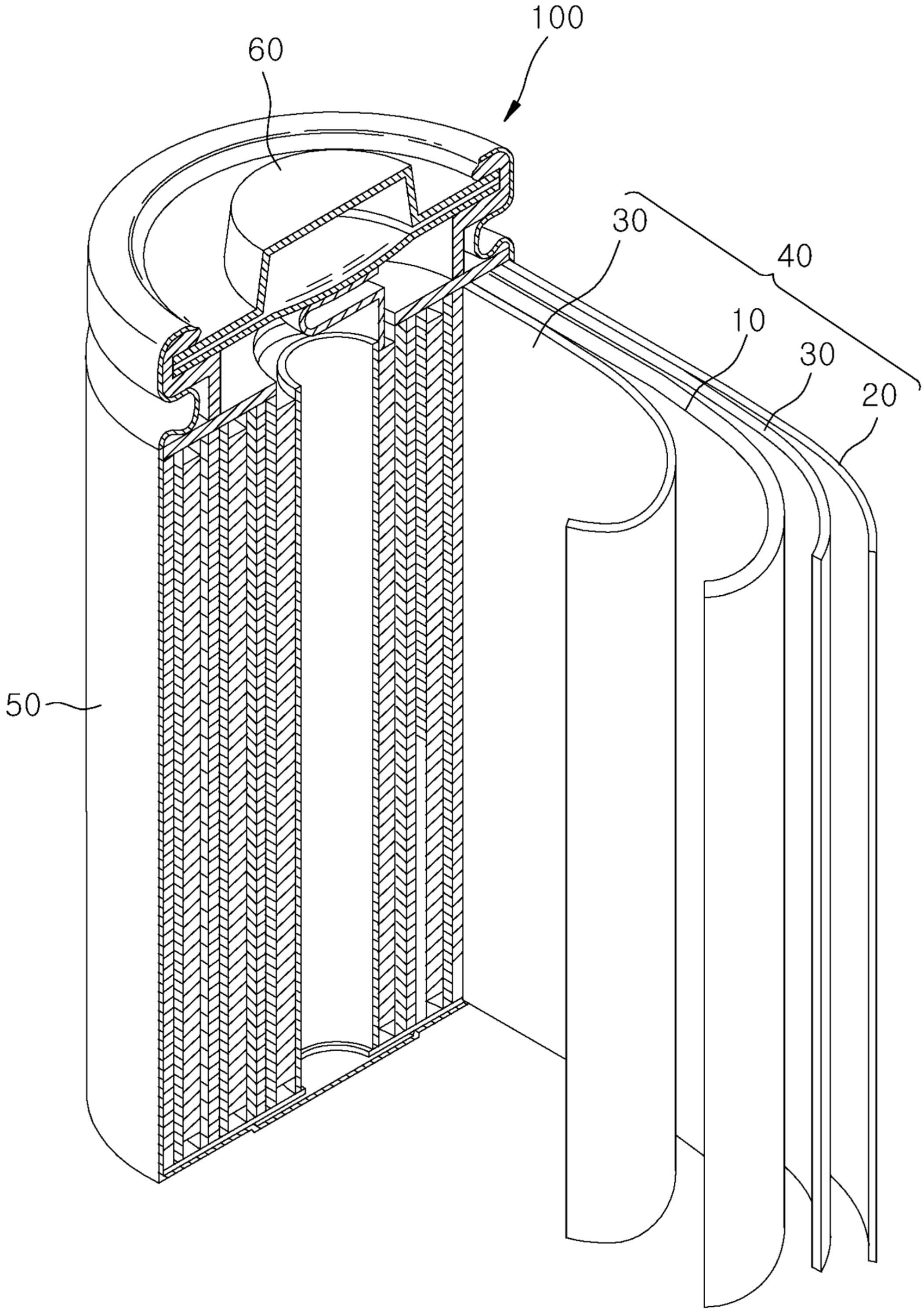

FIG 2.

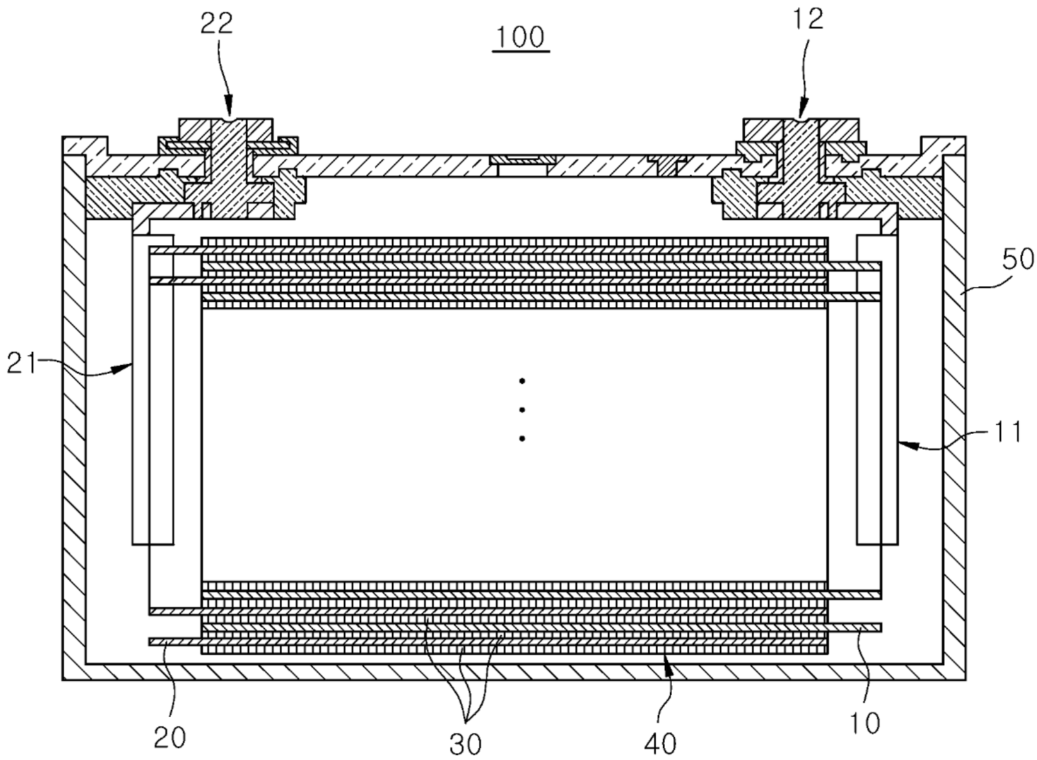

FIG 3.

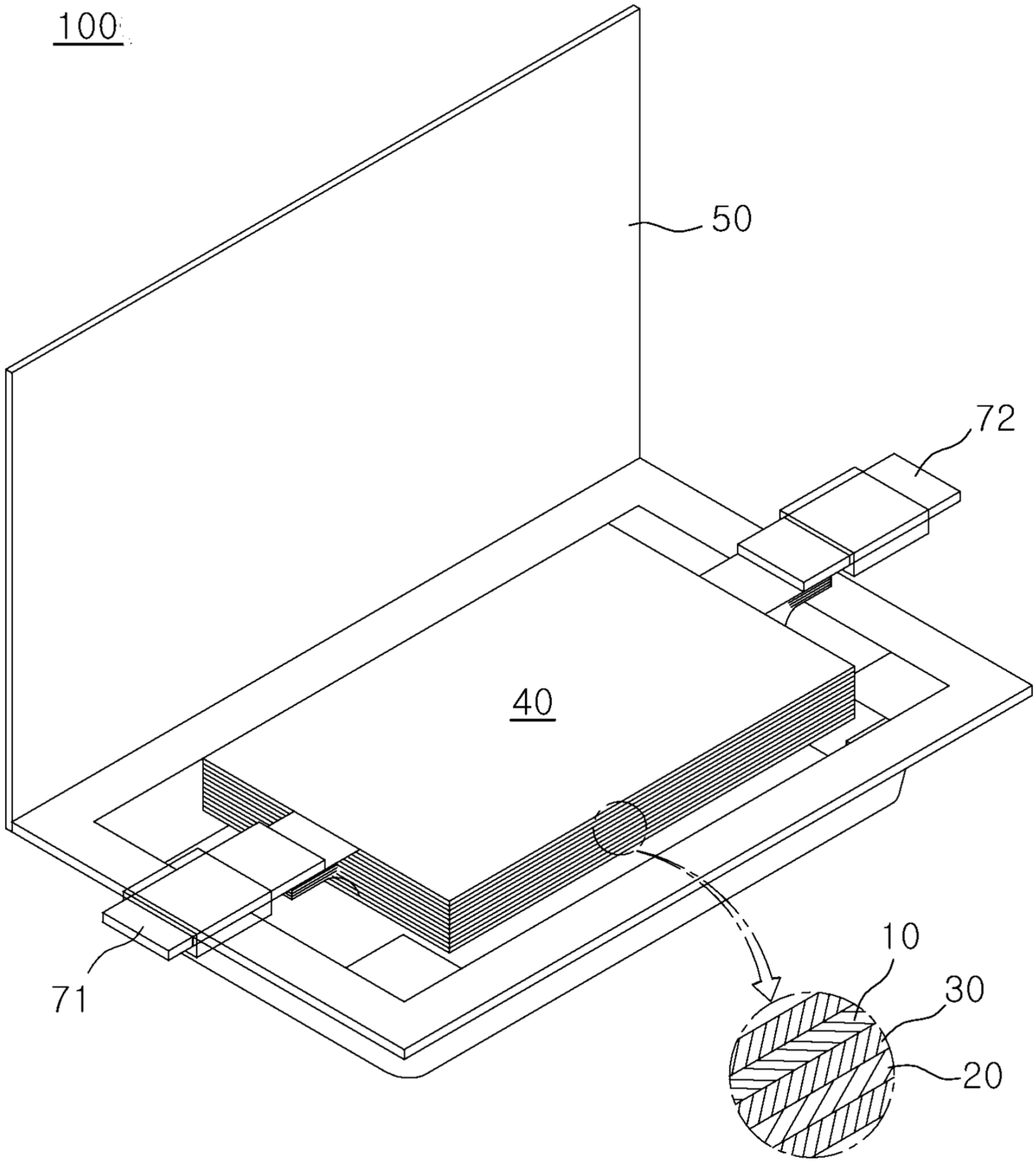

FIG 4.

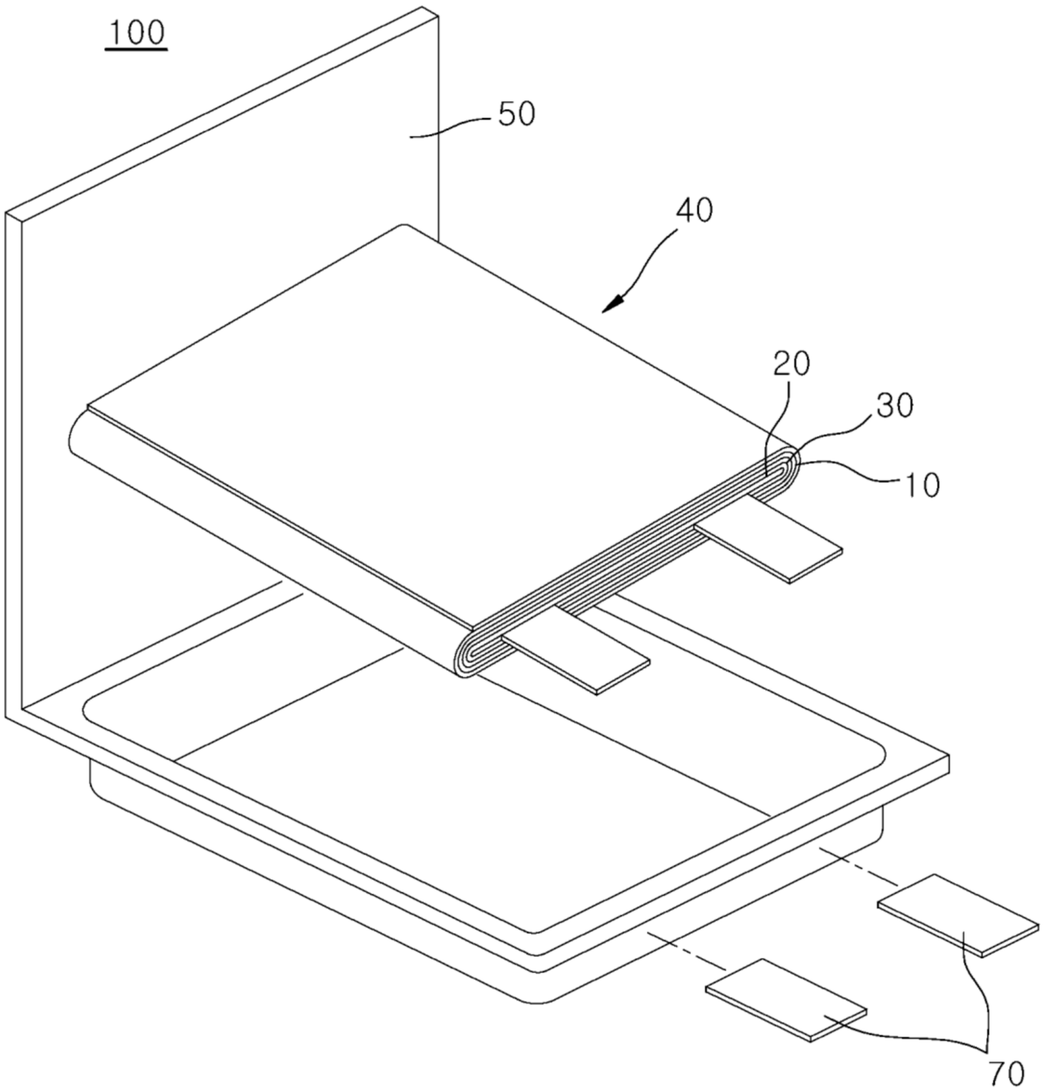

FIG 5.

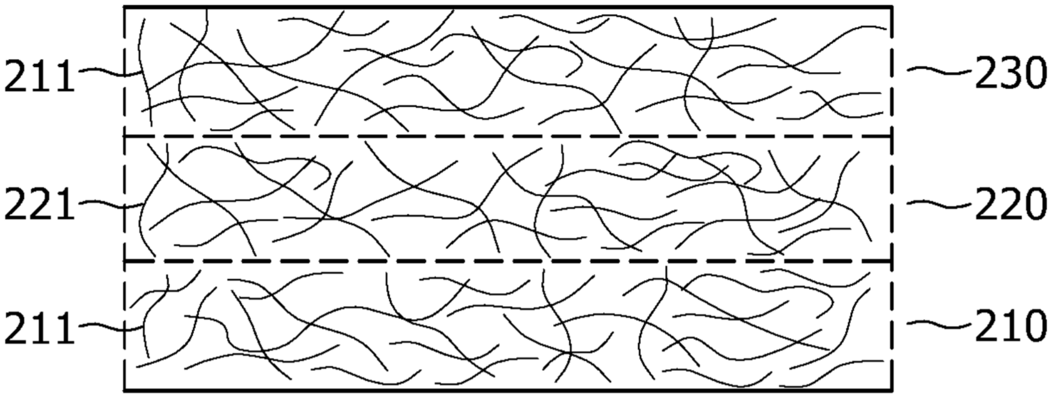


FIG 6.

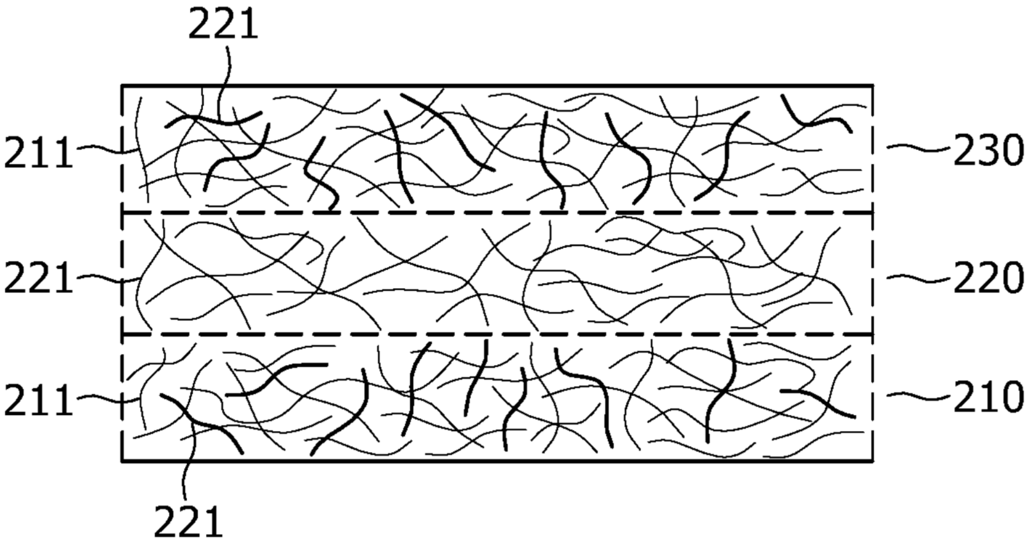


FIG 7.

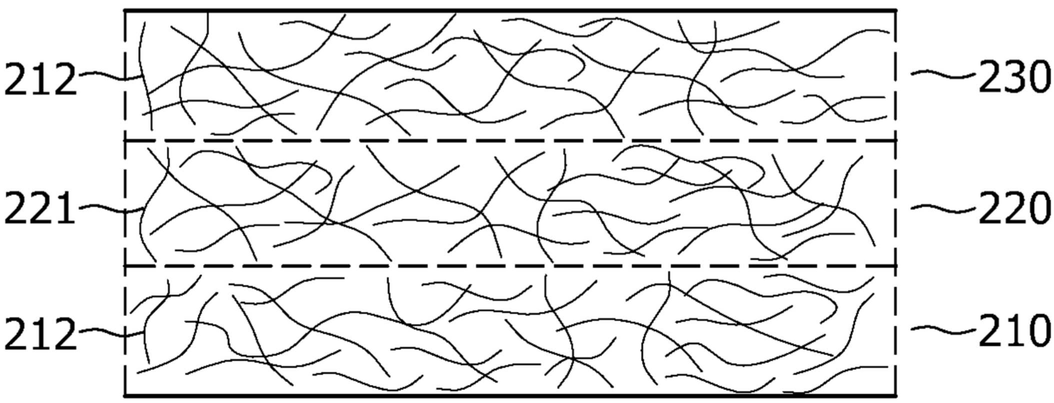

FIG 8.

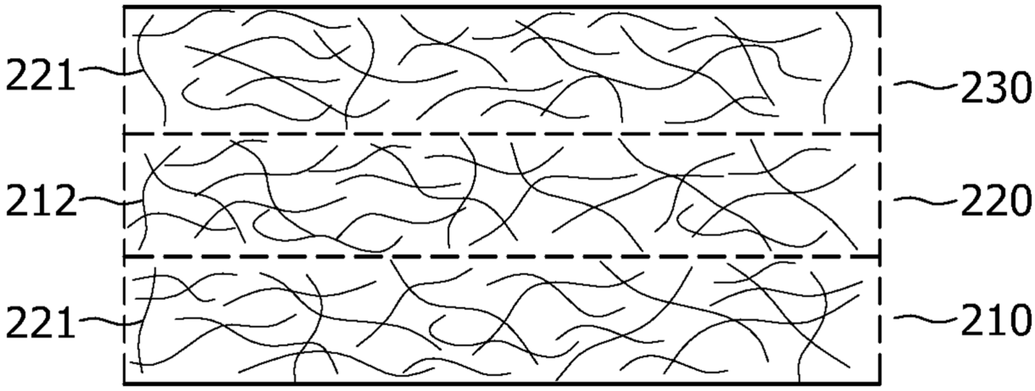


FIG 9.

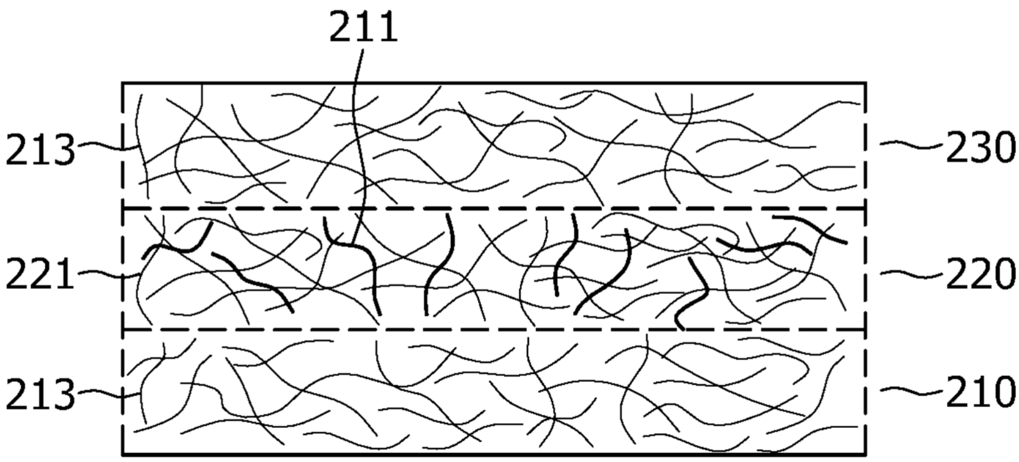

Europäisches Patentamt
European Patent Office
Office européen des brevets

# EUROPEAN SEARCH REPORT

Application Number
EP 25 21 3997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/234231 A1 (ZHANG YIBO [CN] ET AL) 29 July 2021 (2021-07-29) * Embodiment 17; paragraph [0063]; claim all * ----- | 1-15 | INV. H01M50/414 H01M50/42 H01M50/44 H01M50/449 |
| Y | US 2010/233523 A1 (JO SEONG-MU [KR] ET AL) 16 September 2010 (2010-09-16) * Examples 2-1, 2-2; claim all * ----- | 1-15 | |
| Y | WO 2024/085710 A1 (HANSOL CHEMICAL CO LTD [KR]) 25 April 2024 (2024-04-25) * the whole document * | 1-15 | |
| Y,P | -& EP 4 606 828 A1 (HANSOL CHEMICAL CO LTD [KR]) 27 August 2025 (2025-08-27) * paragraph [0009]; example 3 * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 19 February 2026 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 21 3997

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | Publication date | Patent family member(s) | Publication date |
|---|---|---|---|
| US 2021234231 A1 | 29-07-2021 | CN 109950460 A | 28-06-2019 |
| | | US 2021234231 A1 | 29-07-2021 |
| | | WO 2020200072 A1 | 08-10-2020 |
| US 2010233523 A1 | 16-09-2010 | EP 2052426 A1 | 29-04-2009 |
| | | JP 5031835 B2 | 26-09-2012 |
| | | JP 2010500717 A | 07-01-2010 |
| | | KR 20080013208 A | 13-02-2008 |
| | | US 2010233523 A1 | 16-09-2010 |
| | | WO 2008018656 A1 | 14-02-2008 |
| WO 2024085710 A1 | 25-04-2024 | EP 4606828 A1 | 27-08-2025 |
| | | JP 2025534756 A | 17-10-2025 |
| | | KR 20240056182 A | 30-04-2024 |
| | | WO 2024085710 A1 | 25-04-2024 |
| EP 4606828 A1 | 27-08-2025 | EP 4606828 A1 | 27-08-2025 |
| | | JP 2025534756 A | 17-10-2025 |
| | | KR 20240056182 A | 30-04-2024 |
| | | WO 2024085710 A1 | 25-04-2024 |

EPO FORM P0459

For more details about this annex : see Official Journal of the European Patent Office, No. 12/82